# EUROPÄISCHE PATENTSCHRIFT

(11) **EP 1 427 600 B1**
(45) Veröffentlichungstag und Bekanntmachung des Hinweises auf die Patenterteilung: **03.01.2007**
(21) Anmeldenummer: 02779358.7
(22) Anmeldetag: 16.09.2002
(51) Int. Cl.: B60W 10/02, B60W 10/06, F16H 61/14

(54) **VERFAHREN ZUR STEUERUNG UND/ODER REGELUNG DES SCHLEPPMOMENTES IN EINEM ANTRIEBSSTRANG UND STEUER- UND REGELSYSTEM**
METHOD FOR CONTROLLING AND/OR REGULATING THE BRAKING TORQUE IN A DRIVE TRAIN, AND CONTROL AND REGULATING SYSTEM
PROCEDE DE COMMANDE ET / OU DE REGULATION DU COUPLE DE DECELERATION DANS UN ENSEMBLE TRANSMISSION ET SYSTEME DE COMMANDE ET DE REGULATION ASSOCIE

(30) Priorität: 22.09.2001 DE 10146742
(43) Veröffentlichungstag der Anmeldung: 16.06.2004
(73) Patentinhaber: Voith Turbo GmbH & Co. KG, 89522 Heidenheim (DE)
(72) Erfinder: DIETZEL, Bernd, 89428 Syrgenstein (DE)
(74) Vertreter: Dr. Weitzel & Partner
(86) Internationale Anmeldenummer: PCT/EP2002/010360
(87) Internationale Veröffentlichungsnummer: WO 2003/029039

(56) Entgegenhaltungen:
- EP-B- 0 722 394
- DE-A- 3 712 582
- DE-A- 10 025 882
- US-A- 4 347 918
- US-A- 4 957 194
- US-A- 5 807 209
- US-B1- 6 236 929

## Beschreibung

Die Erfindung betrifft ein Verfahren zur Steuerung und/oder Regelung des Schleppmomentes in einem Antriebsstrang, im einzelnen mit den Merkmalen aus dem Oberbegriff des Anspruchs 1. Ferner ein einem Antriebsstrang zugeordnetes Steuer- und/oder Regelsystem zur Steuerung und/oder Regelung des Schleppmomentes.

Verfahren zur Regelung von Schleppmomenten sind für unterschiedlich gestaltete Antriebsstränge, insbesondere dieselelektrische Antriebsstränge aber auch konventionelle mechanische Antriebstränge in unterschiedlichen Ausführungen bekannt. Bei konventionellen Antriebssträngen mit Verbrennungskraftmaschine und mechanischem Antriebsstrang, umfassend ein mit dieser gekoppeltes Getriebe erfolgt im Schubbetrieb eine Umkehr des Energieflusses, das heißt es wird Leistung von den Rädern in das Fahrzeug eingeleitet und dient dem Antrieb des Antriebsstranges von den Rädern zur Verbrennungskraftmaschine. Aus der Druckschrift DE 43 34 210 A1 ist ein Steuerungsverfahren zum Betrieb eines Aggregates für ein Fahrzeug, vorzugsweise ein Kraftfahrzeug bekannt, bei welchem zwischen einer Verbrennungskraftmaschine und einem Getriebe wenigstens noch eine Kupplung vorgesehen ist. Mit einem derartigen Antriebsaggreagt wird dabei unter Zuhilfenahme eines Steuerungscomputers in Schubbetriebsphasen der Antriebsmotor kraftstoffsparend vom Getriebe abgekoppelt und stillgesetzt. Zur Beendigung der Schubbetriebsphase genügt die Betätigung des Fahrpedals mit einem bestimmten Auslenkwinkel und/oder einer bestimmten Änderungsgeschwindigkeit des Auslenkwinkels. Um zu vermeiden, daß ein geübter Fahrer kraftstoffverbrauchserhöhend die Schubbetriebsphase bewußt dadurch unterbricht, daß er das Fahrpedal vorzeitig betätigt, wodurch kurzzeitig ein Motorbremseffekt feststellbar ist, wird erfindungsgemäß vorgeschlagen, die Getrlebeabtrlebswellendrehzahl und die Schalthebelposition während der Schubbetriebsphase ständig zu messen und einem in einem Computerspeicher abgelegten Fahrpedalstellungssollwert zuzuordnen. Durch den anschließenden Vergleich der so ermittelten Fahrpedalsollstellung wird es möglich, die oben genannte Kupplung in der Schubbetriebsphase frühestens dann wieder einzurücken, wenn die ermittelte Fahrpedalstellung mit der aktuellen Fahrpedalstellung übereinstimmt. Bei dieser Lösung wird der kraftstoffsparende Effekt durch die Abkopplung der Antriebsmaschine erzielt, Es ist jedoch erforderlich, mindestens ein Schaltelement zu betätigen und der Schubbetrieb selbst kann nicht beeinflußt werden, insbesondere hinsichtlich der Geschwindigkeit des Fahrzeuges. Gerade bei Fahrt im Gefälle ist diese Lösung daher nachteilig, da hier der Effekt des von der Verbrennungskraftmaschine aufgrund seiner Trägheit erzeugten Bremsmomentes nicht genutzt werden kann. Zur Vermeidung einer unerwünschten Beschleunigung ist es daher erforderlich, zusätzliche Bremseinrichtungen zu betätigen. Auch erfolgt bei dieser Ausführung immer eine Entkopplung der Verbrennungskraftmaschine-ungeachtet dessen, ob das Motorbremsmoment positiv oder negativ ausnutzbar ist. DE 100 25 882 A1 beschreibt ein Verfahren und ein Steuersystem mit den Merkmalen, die in den Oberbegriffen der unabhängigen Ansprüche zusammengefaßt sind.

Der Erfindung liegt die Aufgabe zugrunde, ein Verfahren zur Steuerung und/oder Regelung des Schleppmomentes in einem Antriebsstrang mit einer Verbrennungskraftmaschine und einer mit dieser gekoppelten Getriebebaueinheit, umfassend eine regelbare Kupplung, deren An- und Abtriebsseite wenigstens mittelbar, daß heißt direkt oder indirekt über weitere Leistungsübertragungselemente mit dem Getriebeeingang und dem Getriebeausgang verbindbar sind, im Schubbetrieb zu entwickeln, so daß unabhängig davon, ob das Motorbremsmoment hoch im Sinne einer gewünschten Vermeidung des starken Anstieges der Beschleunigung des Fahrzeuges oder gering ist, immer eine kraftstoffreduzierte Fahrweise ermöglicht wird. Die erfindungsgemäße Lösung soll sich dabei durch einen möglichst geringen steuerungstechnischen Aufwand und die Ausnutzung ohnehin vorhandener Systeme auszeichnen.

Die erfindungsgemäße Lösung ist durch die Merkmale der Ansprüche 1 und 11 charakterisiert. Vorteilhafte Ausgestaltungen sind in den Unteransprüchen wiedergegeben.

Das Verfahren zur Steuerung und/oder Regelung des Schleppmomentes in einem Antriebsstrang, umfassend eine Antriebsmaschine und eine mit dieser koppelbaren Getriebebaueinheit, umfassend eine regelbare Kupplung zwischen dem Getriebeeingang und dem Getriebeausgang, deren Antriebsseite wenigstens mittelbar mit dem Getriebeeingang und deren Abtriebsseite wenigstens mittelbar mit dem Getriebeausgang verbunden ist, ist dadurch charakterisiert, daß im Schubbetrieb die von den Rädern in den Antriebsstrang des Fahrzeuges eingebrachte Leistung über die regelbare Kupplung übertragen wird. Dabei wird das über die regelbare Kupplung übertragbare Moment derart gesteuert oder geregelt, daß die mit der Getriebeeinheit verbundene Antriebsmaschine mit einer Drehzahl n_{M-Soll} gleich oder größer der Leerlaufdrehzal n_{Leerlauf} betrieben wird. Dies bietet den Vorteil, daß in der Folge die Kraftstoffzufuhr zur Verbrennungskraftmaschine reduziert oder automatisch ganz unterbrochen wird. Die Reduktion der Kraftstoffzufuhr oder die Unterbrechung hängt dabei davon ab, ob die In das Fahrzeug eingebrachte und theoretisch für die Verbrennungskraftmaschine zum Antrieb im Schub- bzw. Schleppbetrieb zur Verfügung stehende Leistung tatsächlich ausreicht, um die Verbrennungskraftmaschine mit Leerlaufdrehzahl oder einer größeren Drehzahl zu betreiben.

Die erfindungsgemäße Lösung bietet den Vorteil einer erheblichen Senkung des Kraftstoffverbrauches gegenüber dem herkömmlichen Verhalten in einem mechanischen Antriebsstrang mit ständiger Durchkopplung, da das Fahrzeug nicht durch ein unnötig hohes Schleppmoment der Verbrennungskraftmaschine bei einer aufgrund der Übersetzung im Schaltgetriebe sich zwangsläufig einstellenden Motordrehzahl verzögert wird. Somit ergibt sich bei einem in der Ebene oder in einer Steigung rollenden Fahrzeug ein einem Frellauf ähnliches Verhalten. Dieses Verfahren kann dabei uneingeschränkt bei Fahrten in der Ebene ohne zusätzliche Beschleunigung des Fahrzeuges oder bei nur sehr geringfügiger Beschleunigung des Fahrzeuges eingesetzt werden. Gemäß einer vorteilhaften Welterentwicklung des erfindungsgemäßen Verfahrens kann dieses auch bei Fahrten im Gefälle durch entsprechende Steuerung des übertragbaren Momentes der Kupplung zur Gewährleistung einer Fahrt mit nahezu konstanter Geschwindigkeit vₖₒₙₛₜₐₙₜ oder zumindest Vermeidung einer hohen Beschleunigung modifiziert werden. Dabei wird die Drehzahl für die Verbrennungskraftmaschine in Abhängigkeit einer gewünschten einzuhaltenden Fahrgeschwindigkeit unter Berücksichtigung der zwischen Verbrennungskraftmaschine und den Rädern angeordneten Übertragungseinheiten und deren Übersetzungen eingeregelt. Da diese bei direkter Kopplung mit dem Getriebeeingang bzw. dem Primärteil der Kupplung auch an der Abtriebsseite anliegt, bildet diese die Grundlage für die Bestimmung der Drehzahl an den Rädern unter Berücksichtigung der weiterhin noch zwischengeordneten Übertragungselemente. Mit dieser Lösung kann auf einfache Art und Weise auch im Schubbetrieb eine Beibehaltung der Fahrgeschwindigkeit realisiert werden, wobei das zur Verfügung stehende Motorschleppmoment optimal ausgenutzt und an die konkreten Erfordernisse angepaßt werden kann.

Das Verfahren zur Steuerung und/oder Regelung des Schleppmomentes wird in einem Antriebsstrang, umfassend eine Antriebsmaschine und eine, mit dieser koppelbare Schaltgetriebeelnheit, umfassend eine hydrodynamische Kupplung und eine Überbrückungskupplung, wobei hydrodynamische Kupplung und Überbrückungskupplung parallel schaltbar sind und die Überbrückungskupplung der mechanischen Durchkopplung zwischen dem Primärrad und dem Sekundärrad der hydrodynamischen Kupplung dient, eingesetzt. Erfindungsgemäß wird dabei im Schubbetrieb die von den Rädern in das Fahrzeug, insbesondere den Antriebsstrang eingeleitete Leistung über die hydrodynamische Kupplung übertragen. Die Überbrückungskupplung wird dazu deaktiviert. Erfindungsgemäß wird des weiteren das über die hydrodynamische Kupplung übertragbare Moment durch Änderung des Massenstroms, insbesondere Füllungsgrades derart gesteuert oder geregelt; daß die mit dem Eingang der Getriebeeinheit und damit der Antriebsseite der hydrodynamischen Kupplung verbundene Antriebsmaschine mit einer Drehzahl gleich oder größer der Leerlaufdrehzahl betrieben wird und dadurch in der Folge die Kraftstoffzufuhr zur Verbrennungskraftmaschine reduziert oder automatisch ganz unterbrochen wird. Die Steuerung des Schleppmomentes erfolgt dabei aufgrund der hydrodynamischen Leistungsübertragung verschleißfrei. Die Antriebsseite der hydrodynamischen Kupplung wird dabei von dem Schaufelrad gebildet, welches bei Leistungsübertragung von der Antriebsmaschine zum Abtrieb als Pumpenrad fungiert.

Sollte dabei das über die hydrodynamische Kupplung übertragbare Moment nicht ausreichen, kann zuletzt auch die Überbrückungskupplung geschlossen und somit als schlupfgeregelte Überbrückungskupplung betrieben werden. Die an den Rädern anliegende Antriebsleistung wird dann im Schubbetrieb über zwei Leistungszweige übertragen werden, wobei das übertragende Moment über die hydrodynamische Kupplung aufgrund der Füllungsänderung frei einstellbar ist.

Das erfindungsgemäße Verfahren ist für jede Art von nicht stufenlosen Getriebebaueinheiten, Schaltgetrieben, automatisierten Schaltgetrieben oder Automatgetrieben einsetzbar.

Das erfindungsgemäße Verfahren gestaltet sich dabei im einzelnen wie folgt:

Im Fahrbetrieb wird das Vorliegen eines Schubbetriebes überwacht beziehungsweise erfaßt. Der Schubbetrieb ist dabei im einfachsten Fall durch die Nicht-Betätigung des Fahrpedals charakterisiert und des weiteren durch eine Fahrgeschwindigkeit von > 0 km/h. Dabei werden diese genannten Größen beziehungsweise die die Fahrpedalstellung und die Geschwindigkeit wenigstens mittelbar beschreibenden Größen erfaßt. Bei diesen Größen handelt es sich um Größen, mittels welchen durch mathematische Verknüpfungen oder andere direkte Beziehungen beispielsweise die Geschwindigkeit herleitbar ist.

Um auch einen Schubbetrieb bei Fahrt im Gefälle und bei gleichzeitiger Betätigung des Fahrpedals, wobei das über die Räder in den Antriebsstrang eingeleitete Schleppmoment größer ist als das an der Antriebsmaschine erzeugte, mit zu erfassen, kann beispielsweise eine die Neigung des Fahrzeuges wenigstens indirekt oder direkt charakterisierende Größe erfaßt werden, wobei die Fahrpedalbetätigung in einem Bereich erfolgt, welcher auf ein sehr geringes mögliches bereitzustellendes Antriebsmoment an der Verbrennungskraftmaschine schließen läßt, und daher ebenfalls mit überwacht wird.

Des weiteren wird die Drehzahl der Verbrennungskraftmaschine n_{Motor-Ist} mit der Leerlaufdrehzahl n_{Leerlauf} verglichen. Bei Drehzahlen gleich oder größer der Leerlaufdrehzahl unterbricht die Motorsteuerung die Kraftstoffzufuhr. Ist der für die Verbrennungskraftmaschine aufgrund der Eigenwiderstände im Antriebsstrang zur Verfügung stehende theoretische Schleppleistungsanteil geringer als der zur Erzielung der Leerlaufdrehzahl erforderliche, wird der Kraftstoffverbrauch nur reduziert. Die Einstellung der Leerlaufdrehzahl oder einer geringfügig größeren Drehzahl kann im Rahmen einer Steuerung erfolgen, vorzugsweise wird jedoch die an der Verbrennungskraftmaschine anliegende Leerlaufdrehzahl n_{Leerlauf} oder eine größere Drehzahl über die Einregelung der dazu proportionalen Drehzahl am Eingang der Getriebeeinheit eingeregelt. Diese Regelung ist dabei vor allem dann von Bedeutung, wenn die Einhaltung einer bestimmten Geschwindigkeit oder eines Geschwindigkeitsbereiches, das heißt der Gewährleistung einer Nicht-Beschleunigung oder nur minimalen Beschleunigung gefordert wird, was vor allem für Fahrten im starken Gefälle von erheblicher Bedeutung ist,

Dabei wird eine, die gewünschte einzuhaltende Fahrgeschwindigkeit wenigstens mittelbar charakterisierende Größe fortlaufend erfaßt. Bei der gewünschten Fahrgeschwindigkeit handelt es sich dabei entweder um die aktuelle Ist-Fahrgeschwindigkeit unmittelbar vor dem Schubbetrieb, die aktuelle Ist-Geschwindigkeit bei Beginn des Schubbetriebes oder eine vom Fahrer gewünschte einzustellende geringere Fahrgeschwindigkeit. Entsprechend dieses Sollwertes für die Fahrgeschwindigkeit und damit der Drehzahl an den Rädern wird unter Berücksichtigung der Übertragungselemente zwischen Rädern und der Verbrennunskraftmaschine die Solldrehzahl n_{M-Soll} für die Verbrennungskraftmaschine, welche gleich oder höher als die Leerlaufdrehzahl n_{Leerlauf} ist, festgelegt.

Die Einregelung dieser Drehzahl erfolgt über die regelbare Kupplung, insbesondere das Über diese übertragbare Moment durch Änderung des Füllungsgrades.

Bei Ausführungen automatisierter Schaltgetriebe mit hydrodynamischer Kupplung und Überbrückungskupplung bestehen nach Erkennung des Schubbetriebes nunmehr zwei Möglichkeiten. Bei einer Ausführung eines automatisierten Schaltgetriebes mit hydrodynamischer Kupplung, die vollständig entleerbar ist, kann auf eine separate Trennkupplung verzichtet werden. In diesem Fall ist in einem weiteren zweiten Verfahrensschritt zuerst zu prüfen, ob die hydrodynamische Kupplung, insbesondere der torusförmige Arbeitsraum zwischen dem Primärrad und dem Sekundärrad wenigstens teilbefüllt ist. Ist dies nicht der Fall, wird der Füllvorgang eingeleitet, indem eine Einrichtung zur Beeinflußung des Füllungsgrades angesteuert wird. Ist die hydrodynamische Kupplung befüllt, wobei hier von einem Mindestfüllungsgrad ausgegangen werden muß, wird die Überbrückungskupplung geöffnet. Die Deaktivierung der Überbrückungskupplung kann dabei
a) gleichzeitig mit Einleitung der Befüllung oder aber
b) zeitlich versetzt in einem Zeitintervall, spätestens jedoch mit Abschluß der Befüllung oder dem Erreichen eines Mindestfüllungsgrades eingeleitet werden.

Mit Deaktivierung der Überbrückungskupplung erfolgt die Leistungsübertragung zwischen dem Eingang der Getriebebaueinheit und den Nachschaltstufen oder anderen mechanischen Drehzahl-/Drehmomentwandlungseinrichtungen mit fester Übersetzung damit nur noch über den hydrodynamischen Leistungszweig. Bei automatisierten Schaltgetrieben mit Trennkupplung kann die hydrodynamische Kupplung ständig befüllt bleiben, weshalb der zweite Verfahrensschritt der Überprüfung der Befüllung bei dieser Art von Kupplungen nicht durchgeführt werden muß und damit fakultativ ist. Damit die Leistungsübertragung nur über den hydrodynamischen Zweig erfolgen kann, muß die Überbrückungskupplung geöffnet sein. Die Überbrückungskupplung wird daher in einem automatisierten Schaltgetriebe ohne Trennkupplung in einem dritten Verfahrensschritt geöffnet. Im weiteren vierten Verfahrensschritt erfolgt ein Vergleich der Drehzahl der Verbrennungskraftmaschine n_{Motor-ist} mit der Leerlaufdrehzahl n_{Leerlauf} wie bereits beschrieben, Bei Drehzahlen gleich oder größer der Leerlaufdrehzahl unterbricht die Motorsteuerung die Kraftstoffzufuhr, Ist der für die Verbrennungskraftmaschine aufgrund der Eigenwiderstände im Antriebsstrang zur Verfügung stehende theoretische Schleppleistungsanteil geringer als der zur Erzielung der Leerlaufdrehzahl erforderliche, wird der Kraftstoffverbrauch nur reduziert. Die Einstellung der Leerlaufdrehzahl oder einer geringfügig größeren Drehzahl kann im Rahmen einer Steuerung erfolgen, vorzugsweise wird jedoch die an der Verbrennungskraftmaschine anliegende Leerlaufdrehzahl n_{Leerlauf} oder eine größere Drehzahl aber die Einregelung der dazu proportionalen Drehzahl am Eingang der Getriebeeinheit, insbesondere dem Primärrad eingeregelt. Die Regelung ist dabei vor allem dann von Bedeutung, wenn die Einhaltung einer bestimmten Geschwindigkeit oder einer Geschwindigkeit oder eines Geschwindigkeitsbereiches, das heißt der Gewährleistung einer Nicht-Beschleunigung oder nur minimalen Beschleunigung gefordert wird, was vor allem für Fahrten im starken Gefälle von erheblicher Bedeutung ist. Die Einregelung dieser Drehzahl erfolgt über die hydrodynamische Kupplung insbesondere über das über diese übertragbare Moment durch Änderung des Füllungsgrades.

Die erfindungsgemäße Lösung ist für den Einsatz in Antriebssträngen mit jeglicher Art von Schaltgetrleben - Handschaltgetrieben oder vorzugsweise automatisierten Schaltgetrieben und Automatgetrieben - geeignet, welche eine hydrodynamische Kupplung umfassen.

Vorrichtungsmäßig ist zur Realisierung der Steuer- und Regelungsfunktionen ein Steuer- und Regelungssystem vorgesehen, welches dem Antriebsstrang zugeordnet ist. Dieses umfaßt dabei eine

Steuervorrichtung, vorzugsweise eine der Getriebebaueinheit zugeordnete Steuervorrichtung und eine der Verbrennungskraftmaschine zugeordnete Motorsteuerung, wobei beide Steuervorrichtungen auch in einer integriert sei können und diese Funktion beispielsweise von einer Fahrsteuervorrichtung übernommen wird. Unter dem Begriff Steuervorrichtung wird dabei die Gesamtheit aus Steuergerät, Erfassungseinrichtungen und Stelleinrichtungen sowie die erforderlichen Kopplungsmöglichkeiten - drahtlos, elektronisch e.t.c - zwischen diesen verstanden. Die Steuervorrichtung der Getriebebaueinheit umfaßt dabei mindestens einen Eingang bei serieller Datenübertragung oder eine Vielzahl von parallelen Eingängen, welche mit einer Erfassungseinrichtung zur Erfassung einer die Drehzahl der Verbrennungskraftmaschine n_{M-ist} wenigstens mittelbar charakterisierende Größe, bei Ausführung der regelbaren Kupplung als hydrodynamische Kupplung mit zugeordneter Überbrückungskupplung eine Einrichtung zur Erfassung einer die Betätigung der Überbrückungskupplung wenigstens mittelbar charakterisierende Größe und eine, die Befüllung der hydrodynamischen Kupplung wenigstens mittelbar charakterisierenden Größe und eine Einrichtung zur Erfassung wenigstens einer, das Vorliegen eines Schubbetriebes wenigstens mittelbar charakterisierenden Größe. Diese Daten können dabei auch bei Vorhandensein eines Kommunikationsnetzwerkes, beispielsweise in Form eines CAN-Busses über diesen bereitgestellt werden. Das Steuergerät, vorzugsweise das Steuergerät der Getriebebaueinheit verarbeitet diese und bildet entsprechend den Verfahrensschritten Stellgrößen zur Ansteuerung der einzelnen Elemente der Getriebebaueinheit, Insbesondere zur Deaktivierung der Überbrückungskupplung und zur Befüllung beziehungsweise zur Beeinflussung des Füllungsgrades der hydrodynamischen Kupplung beziehungsweise zur Ansteuerung der Stelleinrichtung der regelbaren Kupplung. Die Reduzierung der Kraftstoffzufuhr erfolgt entsprechend der an der Antriebsmaschine anliegenden Drehzahl automatisch über die der Verbrennungskraftmaschine zugeordnete Steuereinrichtung. Bezüglich der konkreten Ausgestaltung der Steuereinrichtung bestehen eine Vielzahl von Möglichkeiten, welche den in der Figurenbeschreibung beschriebenen Algorithmus durchführen können. Die einzelnen Auswerteinrichtungen können dabei von separaten Elementen gebildet werden oder aber in einer einzigen Auswerteinrichtung zusammengefaßt werden.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung ein Antriebssystem mit automatisiertem Schaltgetriebe oder Automatgetriebe, umfassend eine hydrodynamische Kupplung als regelbare Kupplung, in welchem das erfindungsgemäße Verfahren zum Einsatz gelangt;
- Figur 2: verdeutlicht anhand eines Signalflußbildes das Grundprinzip des erfindungsgemäßen Verfahrens beim Einsatz in einem Antriebssystem gemäß Figur 1;
- Figur 3: verdeutlicht anhand eines Signalflußbildes das Grundprinzip der Drehzahlregelung bei Fahrten im Gefälle für eine Ausführung eines Antriebssystems gemäß Figur 1;
- Figur 4: verdeutlicht die Vorgabe von Stellbereichen am Fahrpedal;

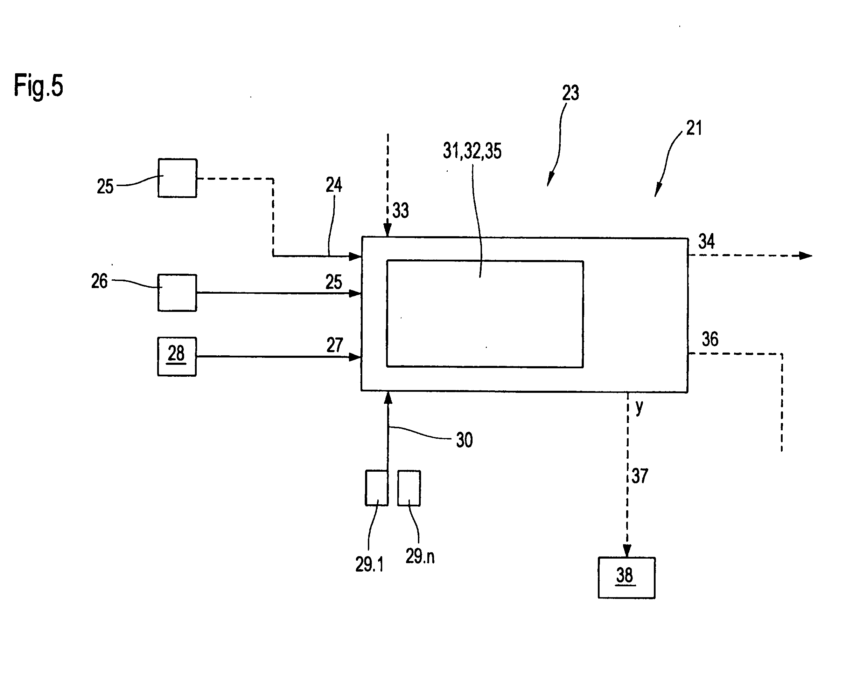

- Figur 5: verdeutlicht in schematisiert vereinfachter Darstellung den Grundaufbau eines Steuer- und Regelungssystemes für ein Antriebssystem zur Durchführung des erfindungsgemäßen Verfahrens;
- Figur 6: verdeutlicht anhand eines Signalflußbildes allgemein das Grundprinzip des erfindungsgemäßen Verfahrens.

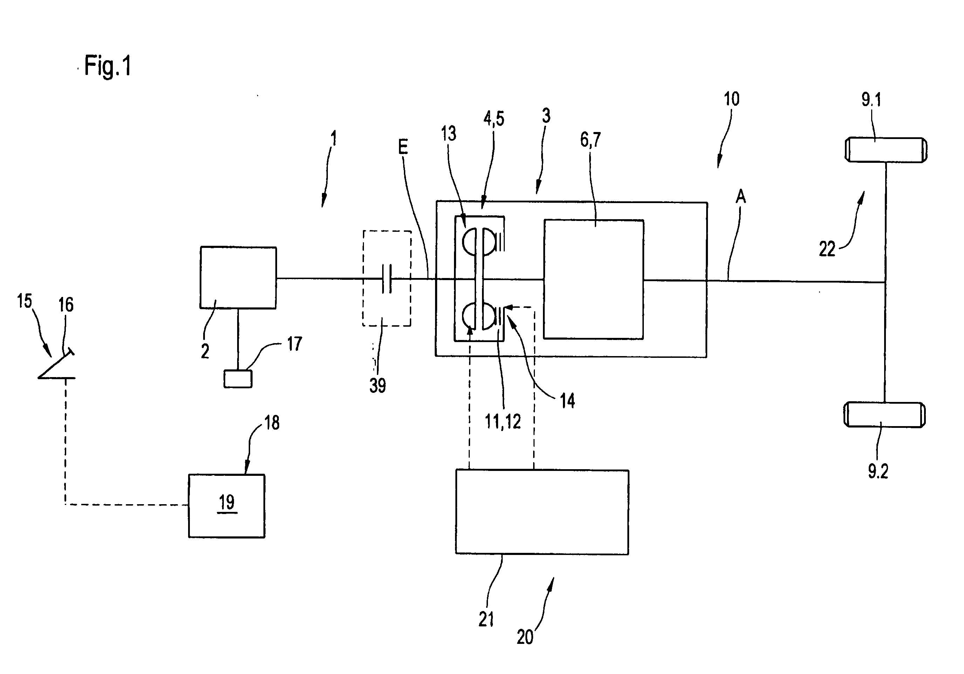

Die Figur 1 verdeutlicht in schematisch vereinfachter Darstellung ein Antriebssystem 1, bei welchem das erfindungsgemäße Verfahren in besonders vorteilhafter Weise zum Einsatz gelangt. Dieses umfaßt eine Verbrennungskraftmaschine 2, eine mechanisch mit dieser gekoppelte oder koppelbare Getriebebaueinheit 3, welche in Form eines automatisierten Schaltgetriebes ausgeführt ist. Bei diesem handelt es sich um ein Schaltgetriebe, bei welchem während der Schaltvorgänge beziehungsweise der Realisierung eines Gangwechsels die Leistungsübertragung zwischen der Getriebebaueinheit und der Antriebsmaschine vollständig unterbrechbar ist. Die Getriebebaueinheit 3 umfaßt dabei ein Anfahrelement 4 in Form einer regelbaren Kupplung 26, hier einer hydrodynamischen Kupplung 5 und einen, mit dem Anfahrelement 4 gekoppelten Getriebeteil 6, welcher in Form von Nachschaltstufen 7 vorliegen kann. Die Antriebsseite des Anfahrelementes 4, hier mit 8 bezeichnet, ist dabei - in Kraftflußrichtung im Traktionsbetrieb von der Verbrennungskraftmaschine zum Abtrieb betrachtet - mit dem Getriebeeingang E gekoppelt. Der Ausgang der Nachschaltstufen bildet in der Regel den Ausgang A der Getriebebaueinheit. Dieser ist über weitere Übertragungsmittel, beispielsweise in Form von Wellensträngen und/oder Drehzahl-/Drehmomentwandlungseinrichtungen mit den anzutreibenden Rädern 9.1, 9.2 eines Fahrzeuges 10 verbunden. Die Getriebebaueinheit 3 umfaßt ferner eine schaltbare Kupplung 11 als Überbrückungskupplung 12, welche parallel zur hydrodynamischen Kupplung 5 schaltbar ist. Die Leistungsübertragung erfolgt dabei entweder in einem ersten Leistungszweig 13 bei Leistungsübertragung über die hydrodynamische Kupplung 5 oder in einem zweiten Leistungszweig 14 bei Leistungsübertragung bei geschalteter Überbrückungskupplung über die Überbrückungskupplung 12. Entsprechend der Auslegung des Systems ist zur Realisierung einer vollständigen Unterbrechung des Kraftflusses zwischen Verbrennungskraftmaschine und Getriebebaueinheit 3 während eines Gangstufenwechsels entweder eine Trennkupplung vorgesehen oder die hydrodynamische Kupplung 5 wird zusätzlich zur Betätigung, insbesondere bei Deaktivierung der Überbrückungskupplung 12 vollständig entleert. Bei Vorsehen einer Trennkupplung kann diese entweder in der Getriebebaueinheit 3 integriert werden oder aber auch alternativ zwischen Verbrennungskraftmaschine 2 und Getriebebaueinheit 3 wie in der Figur 1 mit unterbrochener Linie umrahmt und mit 39 bezeichnet dargestellt, angeordnet sein.

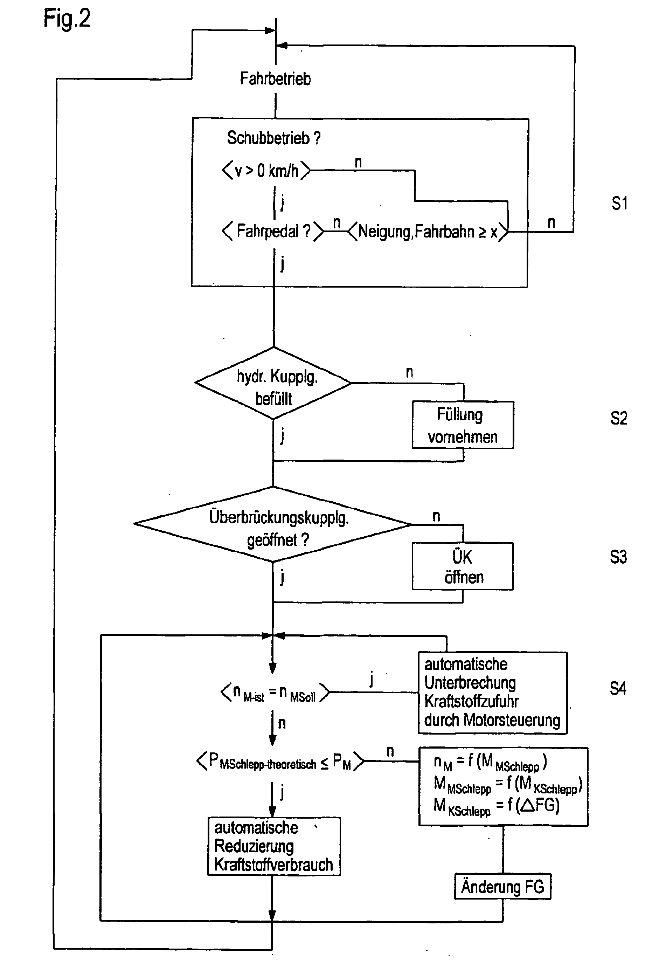

Die Bereitstellung der Leistung erfolgt über die Verbrennungskraftmaschine 2. Die Vorgabe erfolgt beispielsweise über ein Bedienelement 15, beispielsweise in Form eines Fahrpedals 16, welches mit einer Stelleinrichtung 17 in Form eines Leistungsstellgliedes der Verbrennungskraftmaschine 2 gekoppelt ist. Die Kopplung erfolgt vorzugsweise über eine sogenannte Motor-Steuervorrichtung 18, welche eine Steuereinrichtung 19 in Form eines Motor-Steuergerätes umfaßt und mindestens ein Signal für den Fahrerwunsch nach Änderung des Fahrzustandes, insbesondere Beschleunigung oder Verzögerung in mindestens ein entsprechendes Stellsignal zur Beaufschlagung der Stelleinrichtung 17 umsetzt. Des weiteren ist eine Steuervorrichtung 20, vorzugsweise in Form der Getriebesteuervorrichtung vorgesehen, welche eine Steuereinrichtung 21 in Form eines Getriebesteuergerätes umfaßt und die neben der Ansteuerung der einzelnen Stelleinrichtungen zur Beaufschlagung der Schaltelemente der Getriebebaueinheit 3, welche eine Gangstufe charakterisieren, auch der Steuerung der Leistungsübertragung über die hydrodynamische Kupplung 5, insbesondere im Schubbetrieb dient. Erfolgt im Traktionsbetrieb die Leistungsübertragung zwischen Verbrennungskraftmaschine 2 und Abtrieb 22 in Form der anzutreibenden Räder 9.1 und 9.2, so ist der Schubbetrieb durch die Umkehr der Energieflußrichtung charakterisiert. Insbesondere bei Freigabe des Fahrpedals 16 und/oder bei Fahrt im starken Gefälle wird die Verbrennungskraftmaschine 2 durch die Räder 9.1 und 9.2 angetrieben. Erfindungsgemäß wird dabei im Schubbetrieb die Leistung über die hydrodynamische Kupplung 5 übertragen, das heißt, die Überbrückungskupplung 12 geöffnet, beziehungsweise deaktiviert und die hydrodynamische Kupplung 5 bezüglich ihres Momenten-/Übertragungsverhaltens durch Änderung des Füllungsgrades derart gesteuert oder eingeregelt, daß mindestens ein Moment M_{MSchlepp} vom Abtrieb, das heißt den Rädern 9.1 und 9.2 in die Verbrennungskraftmaschine 2 eingeleitet wird, daß diese mindestens mit einer Drehzahl n1, welche größer oder gleich der Leerlaufdrehzahl n_{Leerlauf} ist, betrieben wird. Des weiteren reduziert oder unterbricht die der Verbrennungskraftmaschine 2 zugeordnete Motor-Steuervorrichtung bei Erreichen der Drehzahl n1 die Kraftstoffzufuhr. Dieses Verfahren ist in Figur 2 in Form eines Flußdiagrammes wiedergegeben. Dabei wird im normalen Fahrbetrieb, beispielsweise nach Starten des Fahrzeuges 10 während der gesamten Betriebsdauer der Schubbetrieb beziehungsweise mindestens eine, diesen direkt oder indirekt charakterisierende Größe in einem ersten Verfahrensschritt S1 überwacht beziehungsweise registriert. Befindet sich das Fahrzeug 10 im Schubbetrieb, welcher im einfachsten Fall beispielsweise durch die Nichtbetätigung beziehungsweise Freigabe des Fahrpedales 16 und einen Fahrbetrieb mit einer Geschwindigkeit v > 0 km/h charakterisiert ist, wird gemäß dem Signalflußbild in Figur 2 des weiteren geprüft, ob die hydrodynamische Kupplung 5 gefüllt ist. Liegt keine Füllung vor, wird diese vorgenommen beziehungsweise eingeleitet. Bei zumindest teilweise gefüllter hydrodynamischer Kupplung 5 wird dann die Überbrückungskupplung 12 freigegeben, das heißt deaktiviert. Der Verfahrensschritt der Überprüfung der Befüllung der hydrodynamischen Kupplung 5 ist dabei lediglich bei automatisierten Schaltgetrieben erforderlich, welche auf eine Trennkupplung verzichten und die vollständige Unterbrechung des Kraftflusses während des Schaltvorganges über die Entleerbarkeit der hydrodynamischen Kupplung 5 realisieren. Bei Vorhandensein einer Trennkupplung zur Realisierung der vollständigen Unterbrechung des Kraftflusses zwischen Verbrennungskraftmaschine 2 und Getriebebaueinheit 3 kann auf diesen Schritt 2 verzichtet werden. Bei diesem wird im Schubbetrieb zuerst die Überbrückungskupplung 12 deaktiviert. Dies erfolgt bei dieser Art von Getriebe im Verfahrensschritt S2, bei automatisierten Schaltgetrieben ohne Trennkupplung und Möglichkeit der vollständigen Unterbrechung des Leistungsflusses über die Entleerbarkeit der hydrodynamischen Kupplung im dritten Verfahrensschritt, wie in Figur 2 dargestellt. Dabei kann in diesem dritten Schritt S3 auch eine Abfrage bezüglich der Aktivierung der Überbrückungskupplung erfolgen und im Rahmen der Überprüfung die Deaktivierung vorgenommen werden. Die Leistungsübertragung erfolgt spätestens bei vollständiger Deaktivierung der Überbrückungskupplung 12 über einen ersten Leistungszweig 13, das heißt die hydrodynamische Kupplung 5 und zwar von der bei Betrachtung von der Verbrennungskraftmaschine zu den Rädern eigentlichen Abtriebsseite 22 zur Antriebsseite 8. Des weiteren wird die Kraftstoffzufuhr in Abhängigkeit der zur Verfügung stehenden Schleppleistung im nächsten Verfahrensschritt S4 unterbrochen oder aber zumindest reduziert. Um trotzdem einen reibungsfreien Betrieb des Antriebssystems 1 zu gewährleisten, muß die Verbrennungskraftmaschine 2 zumindest im Leerlauf, das heißt mit Leerlaufdrehzahl n_{Leerlauf} betrieben werden. Dies erfolgt über die über die hydrodynamische Kupplung 5 übertragbare Leistung, wobei mindestens die Leistung bereitgestellt werden muß, die einen Betrieb der Antriebsmaschine, das heißt der Verbrennungskraftmaschine 2 mit Leerlaufdrehzahl n_{Leerlauf} ermöglicht, das heißt, daß die Eigenwiderstände überwunden werden. In Abhängigkeit der zur Verfügung stehenden und die über Räder 9.1 und 9.2 zur Überwindung der Widerstände im Antriebssystem eingeleiteten Leistung, welche als Schleppleistung P_{Schlepp} bezeichnet wird, wird über die Ansteuerung der hydrodynamischen Kupplung 5, insbesondere den Füllungsgrad das durch die hydrodynamische Kupplung 5 übertragene Moment M_{Kschlepp} beeinflußt, daß in die Verbrennungskraftmaschine 2 ein Moment M_{MSchlepp} eingeleitet wird, so daß diese mit mindestens der Leerlaufdrehzahl n_{Leerlauf} oder einer größeren Drehzahl n_{MSchlepp} als diese betrieben wird. Die Drehzahl n_{MSchlepp} der Verbrennungskraftmaschine 2 entspricht dabei entweder der Drehzahl am Eingang E der Getriebebaueinheit 3 und damit der im Schubbetrieb nunmehr als Abtriebseite wirkenden Antriebseite 8 der hydrodynamischen Kupplung 5 oder ist zumindest proportional zu dieser, immer jedoch unter Berücksichtigung eventuell noch auftretender Reibungsverluste oder weiterer zwischengeschalteter Übertragungselemente. Die durch die hydrodynamische Kupplung 5 aufnehmbare Leistung P_{auf} entspricht der über die Räder 9.1 und 9.2 eingeleiteten Schleppleistung P_{Schlepp} minus der zum Antrieb des restlichen Antriebsstranges zwischen Kupplung 5 und Räder 9.1 und 9.2 erforderlichen Leistung P_{ASchlepp}. Über die Beeinflussung des übertragbaren Momentes erfolgt aufgrund der Momentengleichheit zwischen Abtriebsseite und Antriebsseite 8 der hydrodynamischen Kupplung 5 bei gleicher anliegender Leistung P_{Kupplg.} = P_{Schlepp} - P_{ASchlepp} eine Drehzahlwandlung, wodurch in Abhängigkeit weiterer Übertragungseinrichtungen zwischen Verbrennungskraftmaschine 2 und Getriebebaueinheit 3 eine Drehzahl n_{Mschleppist} ³ n_{Leerlauf} eingestellt werden kann. Die Solldrehzahl n_{MSoll} für die Verbrennungskraftmaschine 2 entspricht somit der Leerlaufdrehzahl n_{Leerlauf} oder ist größer und ist damit eine Funktion des über die Kupplung übertragbaren Schleppmomentes M_{Kschlepp}. Die Solldrehzahl n_{M-Soll} kann dabei entweder lediglich eingesteuert werden oder aber auch geregelt, wobei im Falle einer Regelung wie in der Figur 2 im Signalflußbild dargestellt immer ein Vergleich zwischen der Solldrehzahl n_{M-Soll} der Verbrennungskraftmaschine und der tatsächlich eingestellten, welche n_{M-ist} entspricht, erfolgt. Die Reduktion der Kraftstoffzufuhr oder die Unterbrechung hängt dabei davon ab, ob die in das Fahrzeug eingebrachte und theoretisch für die Verbrennungskraftmaschine zum Antrieb im Schub- bzw. Schleppbetrieb zur Verfügung stehende Leistung P_{Mschlepptheoretisch} tatsächlich ausreicht, um die Verbrennungskraftmaschine mit Leerlaufdrehzahl n_{leerlauf} oder einer größeren Drehzahl zu betreiben. Die Reduktion und Unterbrechung erfolgt dabei automatisch und autark über die Motor-Steuervorrichtung bei Erreichen der gewünschten Drehzahl.

Das in der Figur 2 dargestellte Verfahren gilt in dieser Ausführung für Fahrzustände im Schubbetrieb, welche durch den Fahrbetrieb mit einer Geschwindigkeit von v > 0 km/h und einer Nicht-Betätigung des Fahrpedals 16 charakterisiert sind, wobei die Beschleunigung negativ oder positiv sein kann. Der Schubbetrieb tritt jedoch auch bei Fahrten im Gefälle ein, die nicht zwangsläufig durch eine Nicht-Betätigung des Fahrpedals 16 charakterisiert sind, und zwar insbesondere immer dann, wenn die in das Fahrzeug eingeleitete Leistung P_{Schlepp} größer ist als die am Leistungsstellglied der Verbrennungskraftmaschine 2 vorgegebene einzustellende Leistung P_{M-ist}. Dies ist insbesondere bei sehr starkem Gefälle der Fall. Für das Vorliegen eines Schubbetriebes können demnach unterschiedliche Größen herangezogen werden, eine sichere Größe ist die Betätigung des Fahrpedals. Allerdings für den Fall der Fahrt im Gefälle bei gleichzeitiger noch erfolgender Betätigung des Fahrpedals 16 muß zumindest eine weitere, den Schubbetrieb charakterisierende Größe erfaßt werden, beispielsweise die Größe des über die Räder eingeleiteten Schleppmomentes, wobei Schubbetrieb vorliegt, wenn das eingeleitete Schleppmoment größer als das von der Antriebsmaschine abgegebene Moment ist. In diesem Fall, insbesondere bei noch zusätzlicher Betätigung des Fahrpedals wäre das, über die Räder 9.1 und 9.2 eingeleitete Moment gleichgerichtet zu dem von der Verbrennungskraftmaschine 2 abgegebenen Moment und würde dazu addiert werden. Der Verfahrensschritt der Überprüfung, ob die hydrodynamische Kupplung 5 befüllt ist oder nicht, ist nur für automatisierte Schaltgetriebe ohne vorhandene Trennkupplung relevant, während bei automatisierten Schaltgetrieben mit Trennkupplung die hydrodynamische Kupplung 5 immer befüllt sein kann, weshalb dieser Verfahrensschritt dann für diese Art von Getriebe entfallen kann, wobei jedoch gemäß einer vorteilhaften Ausgestaltung zur Sicherheit dieser Verfahrensschritt mit einbezogen wird.

Die Drehzahl der Antriebsmaschine in Form der Verbrennungskraftmaschine 2 kann dabei eingesteuert oder gemäß einer vorteilhaften Ausgestaltung eingeregelt werden. Im entsprechenden Verfahrensschritt 5 gemäß dem Signalflußbild in Figur 2 erfolgt daher in diesem Fall ein Vergleich zwischen der Motor-1st-Drehzahl n_{M-ist} und der Leerlaufdrehzahl n_{Leerlauf} oder einer anderen größeren Drehzahl, welche auch als n_{M-soll} bezeichnet wird. Ist die aktuelle Ist-Drehzahl n_{M-ist} der Verbrennungskraftmaschine dabei geringer als die Leerlaufdrehzahl n_{Leerlauf} oder, hier dargestellt n_{M-soll}, wird die hydrodynamische Kupplung 5 hinsichtlich ihrer Momentenübertragungsfähigkeit dahingehend angesteuert, daß aufgrund der Füllungsgradänderung ΔFG an der nunmehr als Abtriebseite wirkenden Antriebseite 8 eine Drehzahl eingestellt wird, welche gleich oder proportional zur Leerlaufdrehzahl n_{Leerlauf} oder der größeren Drehzahl n_{M-soll} ist. Dabei kann diese größere Drehzahl n_{M-soll} vorgegeben werden oder aber je nach Größe der zur Verfügung stehenden Schleppleistung beliebig in einem Intervall eingestellt werden.

Bezüglich der Möglichkeiten der Steuerung des übertragbaren Momentes über die hydrodynamische Kupplung 5 bestehen eine Mehrzahl von Möglichkeiten, vorzugsweise wird eine einfache Drucksteuerung realisiert. Diese erfolgt bei Vorhandensein eines externen geschlossenen Kreislaufes, welcher der hydrodynamischen Kupplung zugeordnet ist und einen Einlaß und einen Auslaß aus dem Arbeitsraum miteinander verbindet durch das Erzeugen und/oder Aufbringen eines Beeinflussungsdruckes auf ein ruhendes Medium, insbesondere dem im Rahmen einer Betriebsmittelversorgungseinrichtung in einer Betriebsmittelspeichereinrichtung sich einstellenden Betriebsmittelspiegel erfolgen. Dabei wird ein Teil des im Arbeitsraum befindlichen Betriebsmittels während des Betriebes der hydrodynamischen Kupplung 5 in einem geschlossenen Kreislauf zwischen wenigstens einem Austritt aus dem torusförmigen Arbeitsraum zwischen Pumpenrad und Turbinenrad und wenigstens einem Eintritt in den torusförmigen Arbeitsraum geführt, wobei der Eintritt mit einer gegenüber der Umgebung druckdicht geschlossenen Betriebsmittelspeichereinheit gekoppelt ist. Es wird dann eine Stellgröße zur Erzeugung eines Beeinflussungsdruckes auf daß in der Betriebsmittelspeichereinheit ruhende Medium erzeugt und die Stelleinrichtung angesteuert. Die Befüllung oder Entleerung erfolgt dabei bis zur Einstellung einer Druckwaage zwischen dem Betriebsmittelspiegel in der Betriebsmittelspeichereinrichtung und dem rotierenden geschlossenen Kreislauf. Eine andere Möglichkeit besteht darin, insbesondere bei hydrodynamischen Kupplungen ohne derartige geschlossene Systeme, den Füllungsgrad über die Steuerung des Einlaß- und/oder Auslaßdruckes aus der hydrodynamischen Kupplung einzustellen. Die konkrete Wahl der Möglichkeit zur Änderung des Füllungsgrades hängt jedoch von den konkreten Einbausituationen und den zur Verfügung stehenden Versorgungssystemen beziehungsweise Möglichkeiten ab. Eine konkrete Auswahl und Anpassung liegt dabei im Ermessen des zuständigen Fachmannes.

Vorrichtungsmäßig ist dem Antriebssystem 1 dazu ein Steuer- und/oder Regelsystem 23 zugeordnet, welches eine der Verbrennungskraftmaschine zugeordnete Steuervorrichtung 18 und eine der Getriebebaueinheit zugeordnete Steuervorrichtung 20 umfaßt. Die Steuervorrichtung 18 umfaßt eine Steuereinrichtung 19 in Form eines Motorsteuergerätes und dient der Ansteuerung eines Leistungsstellgliedes in Form der Stelleinrichtung 17 zur Beeinflussung der Kraftstoffzufuhr. Die Steuervorrichtung 20 in Form der Getriebesteuervorrichtung umfaßt eine Steuereinrichtung 21, welche in Form eines Getriebesteuergerätes vorliegt und welche neben der Ansteuerung der einzelnen Stelleinrichtungen zur Beaufschlagung der Schaltelemente der Getriebebaueinheit 3 auch der Steuerung der Leistungsübertragung über die hydrodynamische Kupplung 5 dient. Unter Steuervorrichtung wird dabei immer die Gesamtheit aus Steuereinrichtung, das heißt Steuergerät sowie den entsprechenden Verbindungen zu Erfassungseinrichtungen und die Stelleinrichtung sowie die entsprechenden Verbindungen zwischen dem Ausgang oder den Ausgängen des Steuergerätes und der Stelleinrichtung verstanden. Unter Steuereinrichtung wird dabei in der Regel ein Steuergerät, welches in Form eines Mikroprozessors mit entsprechenden Speichermöglichkeiten vorliegt beziehungsweise eine Kombination eines Mikrorechners mit entsprechenden zusätzlichen Funktionskomponenten darstellt, verstanden. Die Steuereinrichtung dient dabei der Verarbeitung einer Vielzahl von Eingangssignalen, welche in die entsprechenden Stellsignale umgesetzt werden. Die Steuereinrichtung 21 umfaßt dabei - je nach serieller oder paralleler Datenübertragung - mindestens einen Eingang 24, welcher mit einer Einrichtung 25 zur Erfassung wenigstens einer, den Schubbetrieb wenigstens mittelbar charakterisierenden Größe gekoppelt ist. Des weiteren wird dem Steuergerät 21 wenigstens eine, den aktuellen Füllungsgrad wenigstens mittelbar charakterisierende Größe in Form eines weiteren Signales zugeführt, was über den gleichen Eingang 24 oder einen weiteren Eingang 25 erfolgen kann. Dieser ist zu diesem Zweck mit einer Einrichtung zur Erfassung des Füllungsgrades beziehungsweise Füllungszustandes der hydrodynamischen Kupplung gekoppelt. Diese Einrichtung ist mit 26 bezeichnet. Die Drehzahl n_{Mist} der Antriebsmaschine 2 wird in der Regel über eine Erfassungseinrichtung 28 ermittelt, welche der Verbrennungskraftmaschine 2 zugeordnet ist und kann entweder über das Steuergerät 19 der Verbrennungskraftmaschine direkt durch direkte Kopplung mit einem Eingang 27 der Steuereinrichtung 21 oder aber über ein Datenkommunikationsnetzwerk, beispielsweise in Form eines CAN-Buses zugeführt werden. Je nachdem, ob eine Reduzierung des Kraftstoffverbrauches durch Reduzierung der Kraftstoffzufuhr oder aber eine vollständige Unterbrechung gewünscht ist, ist es zweckmäßig auch die Größe der zur Verfügung stehenden theoretisch möglichen Schleppleistung P_{Mschlepptheoretisch} zu ermitteln, beziehungsweise wenigstens eine diese wenigstens mittelbar charakterisierende Größe. Dazu sind entsprechende Erfassungseinrichtungen 29.1 bis 29.n erforderlich, die die an den Rädern eingeleitete im Fahrzeug zugeführte Leistung im Schubbetrieb ermitteln beziehungsweise überschlagen und im Hinblick auf den Antriebsstrang eine Aussage über die theoretisch dem Motor zur Verfügung stehende Schleppleistung ermöglichen. Diese Größen werden dabei über einen Eingang 30 zugeführt. Bei serieller Datenübertragung weist dabei das Steuergerät 21 lediglich einen Eingang auf. In der Steuereinrichtung 21 erfolgt zuerst in einer Auswerteeinrichtung 31 eine Überprüfung, ob ein Schubbetrieb vorliegt oder nicht. Wird der Schubbetrieb positiv beschieden, wird je nach Getriebesystem - mit oder ohne Trennkupplung - der Füllungsgrad überprüft, insbesondere das am Eingang 25 anliegende Signal ausgewertet. Dies kann in der gleichen Auswerteeinrichtung 31 oder einer weiteren Auswerteeinrichtung 32 passieren. Entsprechend des Füllungszustandes der hydrodynamischen Kupplung 5 wird dann die Aktivierung der Überbrückungskupplung überprüft. Dazu wird ein an einem Eingang 33 anliegendes Signal, welches eine Betätigung oder Nicht-Betätigung der Überbrückungskupplung schließt, ausgewertet. Bei aktivierter Überbrückungskupplung wird ein Stellsignal zur Deaktivierung an einem Ausgang 34 ausgegeben. Die Aktivierung der Überbrückungskupplung muß jedoch nicht speziell überprüft werden und als Signal separat noch einmal über den Eingang 31 abgerufen werden, sondern kann auch aus der aktuellen Schaltstellung, welche im Steuergerät 21 hinterlegt sein müßte, abgeleitet beziehungsweise übernommen werden. Des weiteren umfaßt das Steuergerät eine weitere Auswerteeinrichtung 35, welche mit den anderen Auswerteeinrichtungen 31 und 32 zu einer baulichen Einheit zusammengefaßt sein kann beziehungsweise deren Funktion von einer einzigen Auswerteinrichtung mit übernommen werden kann, in welcher ein Vergleich der aktuellen Motor-Ist-Drehzahl n_{M-ist} mit der Leerlaufdrehzahl erfolgt, wobei bei Überschreitung dieser Drehzahl optional noch ein Vergleich bezüglich der Größe der theoretisch für die Verbrennungskraftmaschine zur Verfügung stehende Schleppleistung P_{Mschlepp-theoretisch} mit der Leerlaufleistung P_{Schleppleerlauf} erfolgt. Sollte die an den Rädern in das Fahrzeug eingeleitete für den Schleppbetrieb verwendete Leistung kleiner als die für den Leerlaufbetrieb erforderliche Leistung sein, wird von Seiten der Motorsteuervorrichtung nur eine Reduzierung der Kraftstoffzufuhr vorgenommen und die Verbrennungskraftmaschine 2 derart angesteuert, daß die übrige für den Leerlaufbetrieb erforderliche Leistung vom Motor selber erzeugt wird, das heißt, daß sich das vom Motor abgebbare Moment M_{MAb} und das der Verbrennungskraftmaschine zugeführte Schleppmoment _{MSchlepp} addieren. Im anderen Fall, das heißt die theoretisch der Verbrennungskraftmaschine zur Verfügung stellbare Leistung ist größer als die für den Leerlaufbetrieb erforderliche Leistung, kann die Kraftstoffzufuhr vollständig unterbrochen werden. In beiden Fällen erfolgt dabei eine Ansteuerung des Leistungsstellgliedes 17 der Verbrennungskraftmaschine 2 durch die Motor-ECU, wobei diese Ansteuerung über einen Ausgang 36 vorgenommen wird, welcher über einen CAN-Bus entweder direkt mit dem Leistungsstellglied 17 gekoppelt ist oder aber dem Steuergerät 19 der Steuervorrichtung der Verbrennungskraftmaschine. Diese Kopplung kann direkt oder aber auch drahtlos erfolgen. In beiden Fällen erfolgt jedoch die Steuerung des übertragbaren Momentes der hydrodynamischen Kupplung M_{SchleppKupplung} dahingehend, daß die Drehzahl auf der im Traktionsbetrieb als Antriebsseite 8 und im Schleppbetrieb als Abtriebseite fungierenden Einganges E bei direkter Kopplung mit der Verbrennungskraftmaschine 2 einer Drehzahl von größer oder gleich der Leerlaufdrehzahl n_{Leerlauf} der Verbrennungskraftmaschine 2 entspricht oder aber entsprechend proportional zur Drehzahl der Verbrennungskraftmaschine 2 ist, so daß die Drehzahl der Verbrennungskraftmaschine 2 immer unter Berücksichtigung eventuell zwischengeschalteter Übertragungselemente einer Drehzahl von größer oder gleich der Leerlaufdrehzahl entspricht. Dazu wird eine Stellgröße Y zur Änderung des Füllungsgrades an einem Ausgang 37 ausgegeben, beispielsweise in Form eines Druckes oder in Form einer Änderung der Stellung einer Ventileinrichtung. Der Ausgang 37 ist dazu mit einer Einrichtung zur Beeinflussung des Füllungsgrade 38 gekoppelt.

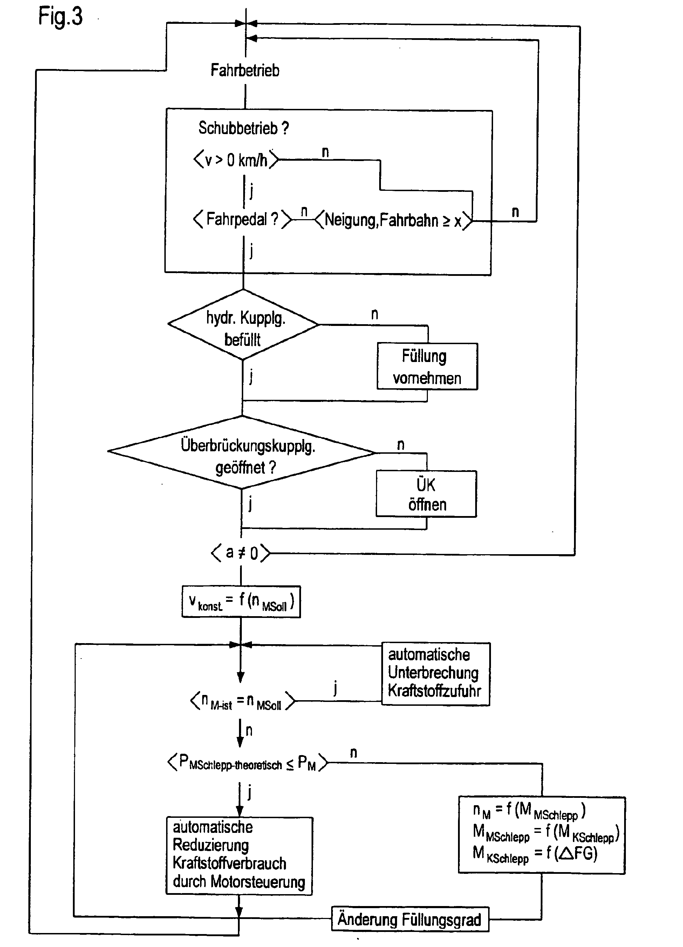

Die erfindungsgemäße Lösung dient der Gewährleistung einer Verbrauchsreduktion im Schubbetrieb durch Steuerung des Schleppmomentes in Antriebssträngen mit Schaltgetrieben dahingehend, daß die Antriebsmaschine wenigstens mit Leerlaufdrehzahl betrieben wird. Die konkrete vorrichtungsmäßige Umsetzung, insbesondere bezüglich des Steuerungs- und Regelungssystems ist nicht an die in der Figur 3 dargestellte Ausführung gebunden. Weitere Modifikationen sind denkbar. Insbesondere können die einzelnen Steuereinrichtungen zu einer Steuereinrichtung zusammengefaßt werden, beziehungsweise die Funktion dieser Steuereinrichtung kann von einer Fahrsteuerung oder einer anderen Steuereinrichtung mit übernommen werden. Bezüglich der Kopplung zwischen den einzelnen Erfassungseinrichtungen und Steuereinrichtungen bestehen ebenfalls eine Mehrzahl von Möglichkeiten. Die einzelnen Größen können dabei in einem Datennetz, beispielsweise einem CAN-Bus für jede der Steuereinrichtungen jederzeit beliebig abrufbar sein. Andere Möglichkeiten, beispielsweise die direkte Kopplung sind ebenfalls denkbar. Die konkrete Auswahl hängt dabei jeweils von den konkreten Einsatzbedingungen ab.

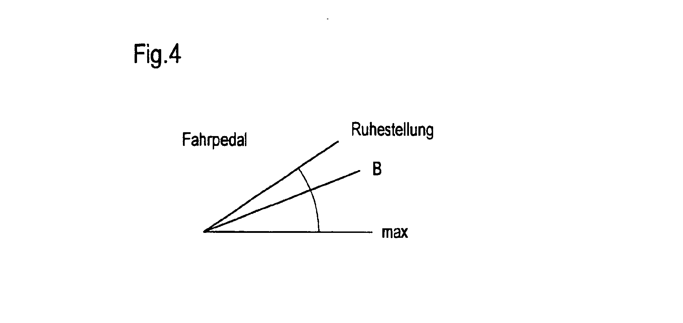

Figur 4 verdeutlicht eine mögliche Bereichsaufteilung am Fahrpedal. Zur Vermeidung von zu abrupten Übergängen zwischen dem Schubbetrieb mit einem zwischen 0 % und 100 % liegenden Schleppmoment und dem Zustand Fahren mit positivem Antriebsmoment (Fahrpedal gibt positives Moment vor, das heißt eine Einspritzmenge an der Verbrennungskraftmaschine) muß die Funktion des Fahrpedals erweitert werden. In schematisiert vereinfachter Darstellung werden dabei drei Stellungen verdeutlicht. Dabei entspricht die Stellung B einem Schleppmoment von Null und gleichzeitig einem vorgegebenen Motormoment von Null. Die Ruhestellung entspricht dem bei der entsprechenden Motordrehzahl n_{M-ist}³ n_{Leerlauf} sich einstellenden maximal möglichen Schleppmoment und die Stellung "Max" entspricht dem maximal vorgebbaren Motormoment. Damit wird ein stufenloser Übergang vom maximalen Schleppmoment bei geschlossener Überbrückungskupplung zu dem bei Anwendung des erfindungsgemäßen Verfahrens sich einstellenden minimalen Schleppmoment bei maximal abgesenkter Motordrehzahl, zum Schleppmoment = 0 / Motormoment = 0 in Stellung B und zum maximalen Motormoment in Stellung "Max" stattfinden. Beim Wechsel aus dem Schubbetrieb in den Betrieb mit positivem Motormoment beziehungsweise beim Wechsel der Fahrpedalstellung aus dem Bereich zwischen Ruhestellung und B in den Bereich zwischen B und "Max" wird die Überbrückungskupplung wieder geschlossen. Dies kann in Abhängigkeit von der Motordrehzahl erfolgen.

Unter einem weiteren Aspekt der Erfindung wird das über die hydrodynamische Kupplung übertragbare Schleppmoment derart gesteuert, beziehungsweise geregelt, daß keine positive Beschleunigung aₚₒₛᵢₜᵢᵥ des Fahrzeuges erzielt wird. Dazu wird eine, die Beschleunigung a wenigstens mittelbar charakterisierende Größe fortlaufend ermittelt und in Abhängigkeit einer gewünschten einzuhaltenden Fahrgeschwindigkeit die Drehzahl im Antriebsstrang und damit insbesondere die Drehzahl der anzutreibenden Räder unter Berücksichtigung des Betriebes der Verbrennungskraftmaschine 2 wenigstens mit Leerlaufdrehzahl n_{Leerlauf} derart beeinflußt, daß gleichzeitig die über die Drehzahl der Räder definierte Fahrgeschwindigkeit einen vorgegebenen Wert nicht überschreitet. Die Geschwindigkeit betrifft dabei die aktuelle Fahrgeschwindigkeit oder die beim Einsetzen des Schubbetriebes vorliegende aktuelle Fahrgeschwindigkeit oder eine vom Fahrer vorgebbare, jedoch vorzugsweise im Bereich der beiden vorher genannten Geschwindigkeiten liegende Fahrgeschwindigkeit. Dazu wird aus der gewünschten Soll-Fahrgeschwindigkeit v_{Soll} eine entsprechende Drehzahl n_{MSoll} für die Verbrennungskraftmaschine 2 unter Berücksichtigung der zwischen den Rädern und der Verbrennungskraftmaschine 2 angeordneten Übertragungselemente festgelegt, welche proportional zu der an den Rädern vorliegenden Drehzahl zur Erzielung einer konstanten Geschwindigkeit Vₖₒₙₛₜₐₙₜ ist. Die Änderung des Füllungsgrades FG der hydrodynamischen Kupplung 5 erfolgt dabei derart, daß entsprechend der zur Verfügung stehenden Leistung ein Moment M übertragen wird, das eine Drehzahl n_{Mist} = n_{MSoll} bedingt. In diesem Fall ist die Einstellung der Drehzahl der Verbrennungskraftmaschine auf eine Drehzahl n_{MSoll} größer oder gleich der Leerlaufdrehzahl n_{Leerlauf} in eine Regelung zur Beibehaltung konstanter Fahrgeschwindigkeit vₖₒₙₛₜₐₙₜ integriert.

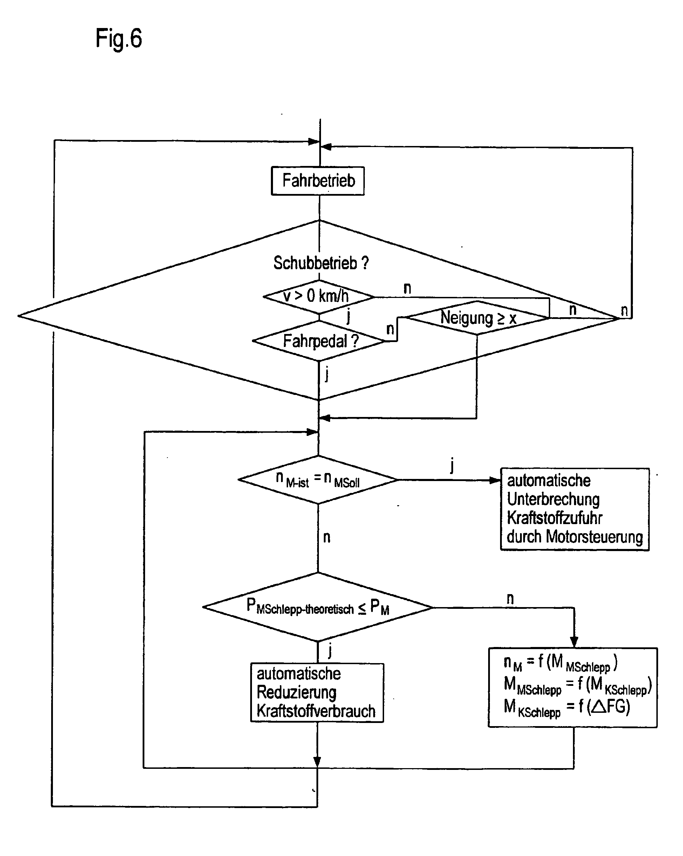

Die Figur 6 verdeutlicht anhand eines Signalflußbildes das Grundprinzip des erfindungsgemäßen Verfahrens für eine Getriebebaueinheit mit einer regelbaren Kupplung 26 zwischen einem Getriebeeingang E und einem Getriebeausgang A, wobei die Antriebsseite der regelbaren Kupplung 26 mit dem Getriebeeingang wenigstens mittelbar, das heißt direkt oder indirekt über weitere Übertragungselemente gekoppelt ist und die Abtriebsseite mit dem Getriebeausgang A direkt oder indirekt über weitere Übertragungselemente verbunden ist. Auch hier erfolgt während des Fahrbetriebes zuerst eine Erfassung beziehungsweise Ermittlung des Vorliegens eines Schubbetriebes. Dieser ist durch den Fahrbetrieb mit einer Geschwindigkeit von V > 0 km/h und einer Nichtbetätigung des Fahrpedals charakterisiert. Dabei kann die Beschleunigung des Fahrzeuges positiv oder negativ sein. Nach Erfassung des Vorliegens eines Schubbetriebes in einem ersten Verfahrensschritt wird des weiteren die Drehzahl der Antriebsmaschine erfaßt und mit einer Laufdrehzahl beziehungsweise einer gewünschten Solldrehzahl n_{M-Soll} welche lediglich geringfügig größer ist als die Leerlaufdrehzahl verglichen. Ist bereits die Leerlaufdrehzahl erreicht oder die gewünschte Solldrehzahl n_{M-Soll}, erfolgt eine automatische Unterbrechung der Kraftstoffzufuhr durch die Motorsteuerung. Dies erfolgt mit dem Verfahrensschritt 2 nachgeordneten Verfahrensschritt 3. Andernfalls wird das theoretisch über die Antriebsräder und den Antriebsstrang eingeleitete Schleppmoment an dem zufolge die Schleppleistung mit der tatsächlich von der Antriebsmaschine abgegebenen Leistung P_{M} verglichen. Reicht die theoretisch zur Verfügung stehende Schleppleistung aus, um die Verbrennungskraftmaschine mit Leerlaufdrehzahl zu betreiben, erfolgt über die regelbare Kupplung eine Steuerung des der Verbrennungskraftmaschine zugeführten Schleppmomentes M_{Schlepp} dahingehend, daß die Leerlaufdrehzahl n_{M-Leerlauf} erreicht wird. Entsprechend der Ausgestaltung der regelbaren Kupplung bedeutet dies eine Änderung der Stellgröße Y, welche an der Stelleinrichtung wirksam wird. Bei Ausführung als hydrodynamische Kupplung ist dies der Füllungsgrad ΔFG. Dies erfolgt so lange, bis die Leerlaufdrehzahl n_{M-Leerlauf} eingestellt ist, beziehungsweise die gewünschte Solldrehzahl n_{M-Soll} der Leerlaufdrehzahl entspricht oder aber einer geringfügig höheren Drehzahl.

### Bezugszeichenliste

- 1: Antriebssystem
- 2: Verbrennungskraftmaschine
- 3: Getriebebaueinheit
- 4: Anfahrelement
- 5: hydrodynamische Kupplung
- 6: Getriebeteil
- 7: Nachschaltstufe
- 8: Antriebsseite
- 9.1, 9.2: Räder
- 10: Fahrzeug
- 11: schaltbare Kupplung
- 12: Überbrückungskupplung
- 13: erster Leistungszweig
- 14: zweiter Leistungszweig
- 15: Bedienelement
- 16: Fahrpedal
- 17: Stelleinrichtung
- 18: Steuervorrichtung
- 19: Steuereinrichtung
- 20: Steuervorrichtung
- 21: Steuereinrichtung
- 22: Abtriebsseite
- 23: Steuer- und/oder Regelsystem
- 24: Eingang
- 25: Einrichtung zur Erfassung wenigstens einer den Schubbetrieb wenigstens mittelbar charakterisierenden Größe
- 25: Eingang
- 26: regelbare Kupplung
- 26: Einrichtung zur Erfassung des Füllungsgrades beziehungsweise Füllungszustandes der hydrodynamischen Kupplung
- 27: Eingang
- 28: Einrichtung zur Erfassung der Drehzahl der Verbrennungskraftmaschine
- 29.1, 29.n: Einrichtungen zur Erfassung von Größen zur Beschreibung der theoretisch für die Verbrennungskraftmaschine zur Verfügung stehenden Schleppleistung P _{MotorSchlepp}
- 30: Eingang
- 31: Auswerteinrichtung
- 32: Auswerteinrichtung
- 33: Eingang
- 34: Ausgang
- 35: Auswerteinrichtung
- 36: Ausgang
- 37: Ausgang
- 38: Einrichtung zur Beeinflussung des Füllungsgrades der hydrodynamischen Kupplung
- 39: Trennkupplung
- E: Getriebeeingang
- A: Getriebeausgang
- P_{Schlepp}: die an den Rädern in das Fahrzeug eingebrachte Leistung
- P_{auf}: aufnehmbare Leistung der hydrodynamischen Kupplung
- M_{Schlepp}: Schleppmoment der Kupplung
- M_{MSchlepp}: an der Verbrennungskraftmaschine eingeleitetes Schleppmoment
- n_{K-Schlepp}: Drehzahl der hydrodynamischen Kupplung
- n_{M-ist}: Ist-Drehzahl der Verbrennunskraftmaschine im Schubbetrieb
- n_{Leerlauf}: Leerlaufdrehzahl
- n_{MSoll}: Solldrehzahl der Verbrennungskraftmaschine im Schubbetrieb

## Patentansprüche

1. Verfahren zur Steuerung und/oder Regelung des Schleppmomentes in einem Antriebsstrang, umfassend eine Antriebsmaschine, insbesondere eine Verbrennungskraftmaschine (2) und eine mit dieser koppelbare Getriebeeinheit (3), umfassend eine regelbare Kupplung (26) zwischen Getriebeeingang (E) und Getriebeausgang (A), deren Antriebsseite wenigstens mittelbar mit dem Getriebeeingang (E) und deren Abtriebsseite bei Leistungsübertragung im Traktionsbetrieb betrachtet wenigstens mittelbar mit dem Getriebeausgang (A) gekoppelt ist;
im Schubbetrieb wird die von den Rädern (9.1, 9.2) in den Antriebsstrang des Fahrzeuges eingebrachte Leistung über die regelbare Kupplung (26) übertragen;
das über die regelbare Kupplung (26) übertragbare Moment wird derart gesteuert oder geregelt, dass die mit der Getriebeeinheit (E) verbundene Antriebsmaschine mit einer Drehzahl n_{M-soll} gleich oder größer der Leerlaufdrehzahl n_{Leerlauf} betrieben wird;
**dadurch gekennzeichnet, dass**
die regelbare Kupplung (26) als hydrodynamische Kupplung (5) ausgeführt ist, der eine Überbrückungskupplung (12) zum mechanischen Durchtrieb zwischen der Antriebsseite und der Abtriebsseite der hydrodynamischen Kupplung (5) zugeordnet ist, wobei hydrodynamische Kupplung (5) und Überbrückungskupplung (12) parallel schaltbar sind, und dass das über die regelbare Kupplung übertragbare Moment durch Änderung des Füllungsgrades gesteuert oder geregelt wird.

2. Verfahren nach Anspruch 1, **dadurch gekennzeichnet, dass** bei Fahrt im Gefälle im Schubbetrieb die Antriebsmaschine mit einer Drehzahl n_{M-Soll} größer als die Leerlaufdrehzahl betrieben wird, wobei n_{M-Soll} unter Berücksichtigung der Übertragungselemente im Antriebsstrang eine bestimmte Fahrgeschwindigkeit des Fahrzeuges v_{Soll} bedingt.

3. Verfahren nach Anspruch 2, **dadurch gekennzeichnet, dass** die Fahrgeschwindigkeit v_{Soll} durch Einstellung der Drehzahl der Antriebsmaschine eingeregelt wird.

4. Verfahren nach einem der Ansprüche 1 bis 3, **dadurch gekennzeichnet, dass** die Drehzahl n_{M-soll} der Antriebsmaschine geregelt wird.

5. Verfahren nach einem der Ansprüche 1 bis 4, **dadurch gekennzeichnet, dass** bei zur Verfügung stehen einer theoretisch der Verbrennungsmaschine (2) zuführbaren Schleppleistung kleiner als die erforderliche Leistung zum Schleppen der Verbrennungskraftmaschine (2) mit Leerlaufdrehzahl n_{Leerlauf} ist, die Kraftstoffzufuhr reduziert wird.

6. Verfahren nach einem der Ansprüche 1 bis 5, **dadurch gekennzeichnet, dass** der Schubbetrieb durch eine der nachfolgend genannten Größen beschreibbar ist:
Geschwindigkeit v > 0 km/h und
Fahrpedal (16) beziehungsweise Bedienelement (15) zur Vorgabe eines Fahrerwunsches ist freigegeben.

7. Verfahren nach einem der Ansprüche 1 bis 6, **dadurch gekennzeichnet, dass** der Schubbetrieb durch eine der nachfolgend genannten Größen beschreibbar ist:
Geschwindigkeit v > 0 km/h und
eine, die Neigung der Fahrbahn wenigstens mittelbar beschreibende Größe.

8. Verfahren nach einem der Ansprüche 1 bis 7, **dadurch gekennzeichnet, dass** im Schubbetrieb die Überbrückungskupplung (12) deaktiviert wird.

9. Verfahren nach einem der Ansprüche 1 bis 8, **dadurch gekennzeichnet, dass** bei einem Schleppmoment, welches höher als das theoretisch bei Vollfüllung der hydrodynamischen Kupplung (5) übertragbare Moment ist, die Überbrückungskupplung (12) geschlossen und mit Schlupf betrieben wird, wobei die in den Antriebsstrang eingeleitete Schleppleistung in einem ersten Leistungszweig über die Überbrückungskupplung (12) und einem zweiten Leistungszweig über die hydrodynamische Kupplung (5) übertragen wird.

10. Verfahren nach einem der Ansprüche 1 bis 9, **gekennzeichnet durch** die folgenden Merkmale:
die hydrodynamische Kupplung (5) ist vollständig entleerbar;
der Füllungszustand der hydrodynamischen Kupplung (5) wird bei Vorliegen des Schubbetriebes ermittelt und bei Nichtbefüllung oder Befüllung unterhalb einer Mindestfüllmenge die Befüllung eingeleitet;
die Überbrückungskupplung (12) wird zu einem Zeitpunkt innerhalb eines Zeitintervales von einschließlich dem Zeitpunkt der Erfassung des Vorliegens eines Schubbetriebes bis zum Abschluss der Befüllung der hydrodynamischen Kupplung (5) deaktiviert.

11. Steuer- und Regelungssystem zur Einstellung des Schleppmomentes für einen Antriebsstrang, umfassend eine Verbrennungskraftmaschine (2) und eine mit dieser koppelbare Getriebebaueinheit (3), umfassend mindestens eine regelbare Kupplung (26) zwischen Getriebeeingang (E) und Getriebeausgang (A), deren Kupplungselemente wenigstens mittelbar mit dem Getriebeeingang (E) und dem Getriebeausgang (A) gekoppelt sind, und ein vom Fahrer betätigbares Bedienelement (15) zur Vorgabe eines Fahrerwunsches nach Änderung des Fahrzustandes;
mit einer Steuereinrichtung, umfassend wenigstens eine serielle Schnittstelle oder eine Vielzahl von Eingängen, welche mit einer Einrichtung zur Erfassung einer, die aktuelle Drehzahl der Verbrennungskraftmaschine (2) wenigstens mittelbar beschreibenden Größe und einer Einrichtung zur Erfassung wenigstens einer, das Vorliegen eines Schubbetriebes wenigstens mittelbar charakterisierenden Größe verbunden ist;
die Steuereinrichtung umfasst des weiteren die oder mindestens eine weitere serielle Schnittstelle oder eine Vielzahl von Ausgängen, die mit einer Stelleinrichtung zur Änderung der Momentenübertragungsfähigkeit der Kupplung (26) verbindbar sind;
die Steuereinrichtung umfasst eine oder mehrere Auswerteinrichtungen für die Eingangsgrößen und mindestens eine Stellgrößenbildnereinrichtung zur Bildung der Stellgrößen für die einzelnen Stelleinrichtungen;
**dadurch gekennzeichnet, dass**
die regelbare Kupplung (26) als hydrodynamische Kupplung (5) ausgebildet ist, und die Stelleinrichtung zur Änderung der Momentenübertragungsfähigkeit der Kupplung (5) eine Einrichtung zur Steuerung des Füllungsgrades der hydrodynamischen Kupplung (5) ist.

12. Steuer-und/oder Regelsystem nach Anspruch 11, **dadurch gekennzeichnet, dass** die Steuereinrichtung von einer Getriebesteuereinrichtung gebildet wird.

13. Steuer- und Regelungssystem nach Anspruch 11 oder 12, **gekennzeichnet durch** die folgenden Merkmale:
mit einer weiteren, der Verbrennungskraftmaschine (2) zugeordneten Motorsteuereinrichtung, umfassend wenigstens einen Eingang und einen Ausgang;
der Eingang ist mit einem Ausgang der Steuereinrichtung oder der Einrichtung zur Erfassung einer die aktuelle Drehzahl der Verbrennungskraftmaschine (2) wenigstens mittelbar charakterisierenden Größe verbunden;
der Ausgang der zweiten Motorsteuereinrichtung ist mit einer Stelleinrichtung zur Änderung der Kraftstoffzufuhr gekoppelt.

14. Steuer- und/oder Regelsystem nach Anspruch 13, **dadurch gekennzeichnet, dass** die Motorsteuereinrichtung einen Microrechner umfasst, welcher bei Erreichen der Leerlaufdrehzahl n_{Leerlauf} eine Stellgröße zur Unterbrechung der Kraftstoffzufuhr für die Stelleinrichtung bildet.

15. Steuer- und/oder Regelsystem nach Anspruch 13, **dadurch gekennzeichnet, dass** die Motorsteuerung einen Microrechner umfasst, welcher bei Erreichen der gewünschten Solldrehzahl n_{Mist} = n_{MSoll} > n_{Leerlauf} eine Stellgröße zur Reduzierung der Kraftstoffzufuhr für die Stelleinrichtung zur Änderung der Kraftstoffzufuhr bildet.

16. Steuer- und/oder Regelsystem nach einem der Ansprüche 11 bis 15, **dadurch gekennzeichnet, dass** die Koppelung zwischen den Steuereinrichtungen und den Erfassungseinrichtungen und/oder den Stelleinrichtungen drahtlos erfolgt.

17. Steuer- und/oder Regelsystem nach einem der Ansprüche 11 bis 16, **dadurch gekennzeichnet, dass** die Steuereinrichung und die Motorsteuerung über ein Datenkommunikationsnetzwerk gekoppelt sind.

18. Steuer- und/oder Regelsystem nach einem Ansprüche 11 bis 17, **gekennzeichnet durch** das folgende Merkmal:
mit einer Einrichtung zur Erfassung einer, die Betätigung des Bedienelementes wenigstens mittelbar charakterisierende Größe, welche mit einem Eingang der Steuereinrichtung gekoppelt ist.

19. Steuer- und/oder Regelsystem nach einem der Ansprüche 11 bis 18, **gekennzeichnet durch** das folgende Merkmal:
- mit einer oder einer Mehrzahl von Einrichtungen zur Erfassung von Größen, die die theoretische, für die Verbrennungskraftmaschine (2) zur Verfügung stehende Schleppleistung P_{Motorschlepp} charakterisieren und mit einem Eingang der Steuereinrichtung koppelbar sind.

20. Steuer- und/oder Regelsystem nach einem der Ansprüche 11 bis 19 für einen Antriebsstrang mit einer der hydrodynamischen Kupplung (5) zugeordneten schaltbaren Kupplung in Form einer Überbrückungskupplung (12) zur mechanischen Durchkopplung zwischen der Antriebsseite und der Abtriebsseite der hydrodynamischen Kupplung (5); die serielle Schnittstelle oder eine Vielzahl von Eingängen sind des weiteren mit
- einer Einrichtung zur Erfassung der Befüllung der hydrodynamischen Kupplung (5) und
- einer Einrichtung zur Erfassung einer die Betätigung der Überbrückungskupplung (12) wenigstens mittelbar charakterisierenden Größe verbunden;
die Schnittstelle oder die Vielzahl von Ausgängen sind mit einer Stelleinrichtung zur Änderung der Momentenübertragungsfähigkeit der hydrodynamischen Kupplung und einer Stelleinrichtung zur Deaktivierung der Überbrückungskupplung koppelbar.

21. Antriebsstrang
mit einer Verbrennungskraftmaschine (2) und einer mit dieser drehfest verbindbaren Getriebebaueinheit (3);
die Getriebebaueinheit (3) umfasst mindestens eine hydrodynamische Kupplung (5);
mit einem vom Fahrer betätigbaren Bedienelement (15) zur Vorgabe eines Fahrerwunsches nach Änderung des Fahrzustandes;
mit einem Steuer- und/oder Regelsystem nach einem der Ansprüche 11 bis 20.

22. Antriebsstrang nach Anspruch 21, **dadurch gekennzeichnet, dass** der hydrodynamischen Kupplung (5) eine schaltbare Kupplung in Form einer Überbrückungskupplung (12) zur mechanischen Durchkoppelung zwischen der Antriebsseite und der Abtriebsseite der hydrodynamischen Kupplung (5) zugeordnet ist.

23. Antriebsstrang nach einem der Ansprüche 21 oder 22, **dadurch gekennzeichnet, dass** die Getriebebaueinheit (3) als Schaltgetriebe ausgeführt ist.

24. Antriebsstrang nach einem der Ansprüche 21 oder 22, **dadurch gekennzeichnet, dass** die Getriebebaueinheit (3) als automatisiertes Schaltgetriebe ausgeführt ist.

25. Antriebsstrang nach einem der Ansprüche 21 oder 22, **dadurch gekennzeichnet, dass** die Getriebebaueinheit (3) als Automatgetriebe ausgeführt ist.

## Claims

1. A method for the open-loop and/or closed-loop control of the drag torque in a drive train, comprising an engine, especially an internal combustion engine (2), and a transmission unit (3) which can be coupled with the same and which comprises a controllable coupling (26) between the transmission input (E) and transmission output (A), whose drive side is coupled at least indirectly with the transmission input (E) and whose driven side is coupled at least indirectly with the transmission output (A) when seen in power transmission in traction operation;
in thrust operation the power introduced by the wheels (9.1, 9.2) into the drive train of the vehicle is transmitted via the controllable coupling (26);
the torque transmitted via the controllable coupling (26) is controlled or regulated in such a way that the engine connected with the transmission unit (E) is operated with a speed n_{M-soll} equal to or higher than the idling speed n_{Leerlauf};
**characterized in that**
the controllable coupling (26) is arranged as a hydrodynamic coupling (5) which is associated with a lock-up clutch (12) for mechanical drive-through between the drive side and the driven side of the hydrodynamic coupling (5), with the hydrodynamic coupling (5) and the lock-up clutch (12) being switchable in parallel, and that the torque transmitted via the controllable coupling is controlled or regulated by changing the degree of filling.

2. A method according to claim 1, **characterized in that** while driving down slopes the engine is operated in thrust operation with a speed n_{M-soll} higher than the idling speed, with n_{M-soll} causing a certain traveling speed of the vehicle vₛₒₗₗ by taking into account the transfer elements in the drive train.

3. A method according to claim 2, **characterized in that** the traveling speed vₛₒₗₗ is adjusted by setting the speed of the engine.

4. A method according to one of the claims 1 to 3, **characterized in that** the speed n_{M-soll} of the engine is regulated.

5. A method according to one of the claims 1 to 4, **characterized in that** the fuel supply is reduced when a drag output of less than the required output for dragging the internal combustion engine (2) with an idling speed n_{Leerlauf} is available, which drag output can theoretically be supplied to the internal combustion engine.

6. A method according to one of the claims 1 to 5, **characterized in that** the thrust operation can be described by one of the following variables mentioned below:
speed v > 0 kph and
accelerator pedal (16) or operating element (15) for predetermining a driver's wish is released.

7. A method according to one of the claims 1 to 6, **characterized in that** the thrust operation can be described by one of the following variables mentioned below:
speed v > 0 kph and
a variable describing the inclination of the roadway at least indirectly.

8. A method according to one of the claims 1 to 7, **characterized in that** the lock-up clutch (12) is deactivated in thrust operation.

9. A method according to one of the claims 1 to 8, **characterized in that** the lock-up clutch (12) is closed and is operated with slip in the case of a drag torque which is higher than the torque which can be transmitted at full filling of the hydrodynamic coupling (5), with the drag output introduced into the drive train being transmitted in a first power branch via the lock-up clutch (12) and a second power branch via the hydrodynamic coupling (5).

10. A method according to one of the claims 1 to 9, **characterized by** the following features:
the hydrodynamic coupling (5) can be fully emptied;
the filling state of the hydrodynamic coupling (5) is determined when there is thrust operation and the filling is initiated in the case of non-filling or filling beneath a minimum filling quantity;
the lock-up clutch (12) is deactivated at a time within a time interval from and including the time of detecting the presence of thrust operation until the completion of the filling of the hydrodynamic coupling (5).

11. An open-loop and closed-loop control system for setting the drag torque for a drive train, comprising an internal combustion engine (2) and a transmission unit (3) which can be coupled with the same, comprising at least one controllable coupling (26) between transmission input (E) and transmission output (A), whose clutch elements are coupled at least indirectly with the transmission input (E) and the transmission output (A), and an operating element (15) to be actuated by the driver for determining the request of a driver for a change of the driving state;
with a control device, comprising at least one serial interface or a plurality of inputs which is connected with a device for detecting a variable describing at least indirectly the current speed of the internal combustion engine (2) and a device for detecting at least one variable characterizing at least indirectly the presence of a thrust operation;
the control device further comprises the serial interface or at least one further serial interface or a plurality of outputs which can be connected with an actuating device for changing the torque transmission capability of the clutch (26);
the control device comprises one or several evaluation devices for the input variables and at least one actuating variable generator device for generating the actuating variables for the individual actuating devices;
**characterized in that**
the controllable coupling (26) is arranged as a hydrodynamic coupling (5) and the actuating device for changing the torque transmission capability of the coupling (5) is a device for controlling the degree of filling of the hydrodynamic coupling (5).

12. An open-loop and/or closed-loop control system according to claim 11, **characterized in that** the control device is formed by a transmission control device.

13. An open-loop and control system according to claim 11 or 12, **characterized by** the following features:
with a further engine control device which is associated with the internal combustion engine (2) and comprises at least one input and one output; the input is connected with an output of the control device or the device for detecting a variable characterizing at least indirectly the current speed of the internal combustion engine (2);
the output of the second engine control device is coupled with an actuating device for changing the fuel supply.

14. An open-loop and/or closed-loop control system according to claim 13, **characterized in that** the engine control device comprises a microcomputer which forms an actuating variable for the actuating device for interrupting the fuel supply upon reaching the idling speed n_{Leerlauf}.

15. An open-loop and/or closed-loop control system according to claim 13, **characterized in that** the motor control unit comprises a microcomputer which forms an actuating variable for reducing the fuel supply for the actuating device for changing the fuel supply upon reaching the desired setpoint speed n_{Mist} = n_{MSoll} > n_{Leerlauf-}

16. An open-loop and/or closed-loop control system according to one of the claims 11 to 15, **characterized in that** the coupling between the control devices and the detection devices and/or the actuating devices occurs in a wireless manner.

17. An open-loop and/or closed-loop control system according to one of the claims 11 to 16, **characterized in that** the control device and the engine control unit are coupled via a data communication network.

18. An open-loop and/or closed-loop control system according to one of the claims 11 to 17, **characterized by** the following feature:
with a device for detecting a variable which characterizes at least indirectly the actuation of the operating element and which is coupled with an input of the control device.

19. An open-loop and/or closed-loop control system according to one of the claims 11 to 18, **characterized by** the following feature:
- with one or a plurality of devices for detecting variables which characterize the theoretic drag output P_{Motorschlepp} available for the internal combustion engine (2) and which can be coupled with the input of the control device.

20. An open-loop and/or closed-loop control system according to one of the claims 11 to 19 for a drive train with a switchable clutch in the form of a lock-up clutch (12) associated with a hydrodynamic coupling (5) for providing mechanical through-coupling between the drive side and the driven side of the hydrodynamic coupling (5); the serial interface or a plurality of inputs are further connected
- with a device for detecting the filling of the hydrodynamic coupling (5) and
- a device for detecting a variable characterizing at least indirectly the actuation of the lock-up clutch (12);
the interface or the plurality of outputs can be coupled with an actuating device for changing the torque transmission capability of the hydrodynamic coupling and an actuating device for deactivating the lock-up clutch.

21. A drive train
with an internal combustion engine (2) and a transmission unit (3) which can be connected in a torsionally rigid manner with the same;
the transmission unit (3) comprises at least one hydrodynamic coupling (5); with an operating element (15) to be actuated by the driver for determining the request of the driver for a change of the driving state;
with an open-loop and/or closed-loop control system according to one of the claims 11 to 20.

22. A drive train according to claim 21, **characterized in that** a switchable clutch in the form of a lock-up clutch (12) is associated with the hydrodynamic coupling (5) for providing mechanical through-coupling between the drive side and the driven side of the hydrodynamic coupling (5).

23. A drive train according to one of the claims 21 or 22, **characterized in that** the transmission unit (3) is arranged as a manual transmission.

24. A drive train according to one of the claims 21 or 22, **characterized in that** the transmission unit (3) is arranged as an automated manual transmission.

25. A drive train according to one of the claims 21 or 22, **characterized in that** the transmission unit (3) is arranged as an automatic transmission.

## Revendications

1. Procédé pour la commande et/ou la régulation du couple de patinage dans une chaîne cinématique, comprenant un moteur d'entraînement, en particulier un moteur à combustion interne (2), et une unité de transmission (3) pouvant être couplée à celui-ci, comprenant un accouplement contrôlable (26) entre entrée de la transmission (E) et la sortie de la transmission (A), dont le côté d'entraînement est couplé au moins indirectement avec l'entrée de la transmission (E) et le côté de sortie, lors de la transmission de puissance en mode de traction, au moins indirectement couplé, dans le sens de la traction, avec la sortie de la transmission (A) ;
en fonctionnement en poussée, la puissance exercée par les roues (9.1, 9.2) dans la chaîne cinématique du véhicule est transmise par l'accouplement contrôlable (26) ;
le couple transmis par l'accouplement contrôlable (26) est commandé ou régulé de telle manière que le moteur relié à l'unité de transmission (E) est entraîné à une vitesse de rotation n_{M-consigne} égale ou supérieure à la vitesse de rotation au point mort n_{point mort} ;
**caractérisé en ce que** l'accouplement contrôlable (26) est réalisé comme un accouplement hydrodynamique (5) qui est associé à un convertisseur de couple à verrouillage (12) pour la transmission mécanique entre le côté d'entraînement et le côté de sortie de l'accouplement hydrodynamique (5), l'accouplement hydrodynamique (5) et le convertisseur de couple à verrouillage (12) pouvant être actionnés en parallèle, et **en ce que** le couple pouvant être transmis par l'accouplement contrôlable est commandé ou régulé par les variations du niveau de remplissage.

2. Procédé selon la revendication 1, **caractérisé en ce que** dans les trajets en pente en mode de poussée, le moteur d'entraînement fonctionne à une vitesse de rotation n_{M-consigne} supérieure à la vitesse de rotation au point mort, n_{M-consigne} déterminant, compte tenu des éléments de transmission dans la chaîne cinématique, une certaine vitesse de circulation du véhicule _{vconsigne}.

3. Procédé selon la revendication 2, **caractérisé en ce que** la vitesse de circulation v_{consigne} est ajustée par le réglage de la vitesse de rotation du moteur d'entraînement.

4. Procédé selon l'une des revendications 1 à 3, **caractérisé en ce que** la vitesse de rotation n_{M-consigne} du moteur d'entraînement est régulée.

5. Procédé selon l'une des revendications 1 à 4, **caractérisé en ce que** lorsqu'une puissance de patinage théorique pouvant être transmise au moteur à combustion interne (2) est inférieure à la puissance nécessaire au patinage du moteur à combustion interne (2) à la vitesse de rotation au point mort n_{point mort}, l'alimentation en carburant est réduite.

6. Procédé selon l'une des revendications 1 à 5, **caractérisé en ce que** le mode de patinage peut être décrit par l'une des grandeurs suivantes : vitesse v > 0 km/h et
pédale d'accélération (16) ou élément de commande (15) servant à signaler une demande du conducteur libérés.

7. Procédé selon l'une des revendications 1 à 6, **caractérisé en ce que** le mode de poussée peut être décrit par l'une des grandeurs suivantes : vitesse v > 0 km/h et
une grandeur décrivant au moins indirectement l'inclinaison de la chaussée.

8. Procédé selon l'une des revendications 1 à 7, **caractérisé en ce qu'**en mode de poussée, le convertisseur de couple à verrouillage (12) est désactivé.

9. Procédé selon l'une des revendications 1 à 8, **caractérisé en ce qu'**à un couple de patinage supérieur au couple théoriquement transmissible lorsque l'accouplement hydrodynamique (5) est complètement rempli, le convertisseur de couple à verrouillage (12) est fermé et fonctionne avec un patinage, la puissance de patinage communiquée à la chaîne cinématique étant transmise dans une première branche de puissance par le convertisseur de couple à verrouillage (12) et dans une deuxième branche de puissance par l'accouplement hydrodynamique (5).

10. Procédé selon l'une des revendications 1 à 9, **caractérisé en ce que** :
l'accouplement hydrodynamique (5) peut être complètement vidé ;
le niveau de remplissage de l'accouplement hydrodynamique (5) est déterminé lorsque le mode de poussée est présent et le remplissage activé s'il n'est pas rempli ou rempli en dessous d'une quantité minimum ;
le convertisseur de couple à verrouillage (12) est désactivé à un moment situé dans un intervalle de temps compris entre le moment, inclus, de détection de la présence d'un fonctionnement en poussée et la fin du remplissage de l'accouplement hydrodynamique (5).

11. Système de commande et de régulation pour le réglage du couple de patinage dans une chaîne cinématique, comprenant un moteur à combustion interne (2) et une unité de transmission (3) pouvant être couplée à celui-ci, comprenant un accouplement contrôlable (26) entre l'entrée de la transmission (E) et la sortie de la transmission (A), dont les éléments d'accouplement sont couplés au moins indirectement avec l'entrée de la transmission (E) et la sortie de la transmission (A), et un élément de commande (15) pouvant être actionné par le conducteur pour signaler une demande du conducteur concernant un changement de l'état de conduite ;
avec un dispositif de commande comprenant au moins une interface série et une pluralité d'entrées, qui sont reliées avec un dispositif pour la détection d'une grandeur décrivant au moins indirectement la vitesse de rotation actuelle du moteur à combustion interne (2) et un dispositif pour la détection d'au moins une grandeur caractérisant au moins indirectement la présence d'un mode de poussée ;
le dispositif de commande comprend en outre l'interface série ou au moins une autre interface série ou une pluralité de sorties qui peuvent être mises en communication avec un dispositif de réglage pour modifier la capacité de transmission du couple de l'accouplement (26) ;
le dispositif de commande comprend un ou plusieurs dispositifs d'interprétation pour les grandeurs d'entrée et au moins un dispositif de constitution de grandeurs de réglage pour la constitution des grandeurs de réglage des différents dispositifs de réglage ;
**caractérisé en ce que** l'accouplement contrôlable (26) est conçu comme un accouplement hydrodynamique (5) et le dispositif de réglage modifiant la capacité de transmission du couple de l'accouplement (5) est un dispositif pour contrôler le niveau de remplissage de l'accouplement hydrodynamique (5).

12. Dispositif de commande et/ou de régulation selon la revendication 11,
**caractérisé en ce que** le dispositif de commande est formé par un dispositif de commande de la transmission.

13. Dispositif de commande et/ou de régulation selon la revendication 11 ou
12, **caractérisé en ce qu'**il comporte les caractéristiques suivantes :
un autre dispositif de commande du moteur associé au moteur à combustion interne (2) et comprenant au moins une entrée et une sortie ; l'entrée communique avec une sortie du dispositif de commande ou du dispositif pour détecter une grandeur caractérisant au moins indirectement la vitesse de rotation actuelle du moteur à combustion interne (2) ;
la sortie du deuxième dispositif de commande du moteur est couplée à un dispositif de réglage modifiant l'alimentation en carburant.

14. Système de commande et/ou de régulation selon la revendication 13,
**caractérisé en ce que** le dispositif de commande du moteur comprend un micro-ordinateur qui constitue, lorsque la vitesse de rotation au point mort n_{point mort} est atteinte, une grandeur de réglage pour l'interruption de l'alimentation en carburant destinée au dispositif de réglage.

15. Système de commande et/ou de régulation selon la revendication 13,
**caractérisé en ce que** la commande du moteur comprend un micro-ordinateur qui constitue, lorsque la vitesse de rotation de consigne souhaitée, n_{M} réel = n_{M consigne} > n_{point mort}, est atteinte, une grandeur de réglage pour la réduction de l'alimentation en carburant destinée au dispositif de réglage modifiant l'alimentation en carburant.

16. Système de commande et/ou de régulation selon l'une des revendications 11 à 15, **caractérisé en ce que** le couplage entre les dispositifs de commande et les dispositifs de détection et/ou les dispositifs de réglage est réalisé sans fil.

17. Système de commande et/ou de régulation selon l'une des revendications 11 à 16, **caractérisé en ce que** le dispositif de commande et la commande du moteur sont couplés par un réseau de communication de données.

18. Système de commande et/ou de régulation selon l'une des revendications 11 à 17, **caractérisé en ce qu'**il comporte un dispositif pour détecter une grandeur caractérisant au moins indirectement l'actionnement de l'élément de commande, qui est couplé à une entrée du dispositif de commande.

19. Système de commande et/ou de régulation selon l'une des revendications 11 à 18, **caractérisé en ce qu'**il comporte un dispositif ou une pluralité de dispositifs destinés à détecter des grandeurs caractérisant la puissance de patinage théorique P_{patinage moteur} disponible pour le moteur à combustion interne (2) et pouvant être couplés à une entrée du dispositif de commande.

20. Système de commande et/ou de régulation selon l'une des revendications 11 à 19 pour une chaîne cinématique avec un accouplement embrayable associé à l'accouplement hydrodynamique (5) et prenant la forme d'un convertisseur de couple à verrouillage (12) pour la transmission mécanique entre le côté d'entraînement et le côté de sortie de l'accouplement hydrodynamique (5) ;
l'interface série ou une pluralité d'entrées communiquent en outre avec :
- un dispositif pour détecter le remplissage de l'accouplement hydrodynamique (5) et
- un dispositif pour détecter une grandeur caractérisant au moins indirectement l'actionnement du convertisseur de couple à verrouillage (12) ;
l'interface ou la pluralité de sorties peuvent être couplées à un dispositif de réglage modifiant la capacité de transmission du couple de l'accouplement hydrodynamique et à un dispositif de réglage pour désactiver le convertisseur de couple à verrouillage.

21. Chaîne cinématique avec un moteur à combustion interne (2) et une unité de transmission (3) pouvant être reliée à celui-ci de manière solidaire en rotation ;
l'unité de transmission (3) comprend au moins un accouplement hydrodynamique (5) ;
avec un élément de commande (15) pouvant être actionné par le conducteur pour signaler une demande du conducteur concernant un changement de l'état de conduite ;
avec un système de commande et/ou de régulation selon l'une des revendications 11 à 20.

22. Chaîne cinématique selon la revendication 21, **caractérisée en ce que** l'accouplement hydrodynamique (5) est un accouplement embrayable prenant la forme d'un convertisseur de couple à verrouillage (12) pour la transmission mécanique entre le côté d'entraînement et le côté de sortie de l'accouplement hydrodynamique (5).

23. Chaîne cinématique selon l'une des revendications 21 ou 22, **caractérisée en ce que** l'unité de transmission (3) est construite comme une boîte de vitesses.

24. Chaîne cinématique selon l'une des revendications 21 ou 22, **caractérisée en ce que** l'unité de transmission (3) est construite comme une boîte de vitesses automatisée.

25. Chaîne cinématique selon l'une des revendications 21 ou 22, **caractérisée en ce que** l'unité de transmission (3) est construite comme une boîte automatique.
